# EUROPEAN PATENT SPECIFICATION

(11) **EP 1 705 109 B1**
(45) Date of publication and mention of the grant of the patent: **09.12.2009**
(21) Application number: 05006609.1
(22) Date of filing: 24.03.2005
(51) Int. Cl.: B62J 7/04

(54) **Carrier rack for a bicycle**
Gepäckträger für Fahrräder
Portebagage pour bicyclette

(43) Date of publication of application: 27.09.2006
(73) Proprietor: HAMAX AS, 1679 Krakeroy (NO)
(72) Inventor: Hoidal, Dag, 1675 Krakeroy (NO); Hermansen, Leif, 1675 Krakeroy (NO); Eskild, Asbjorn, 1675 Krakeroy (NO)
(74) Representative: Popp, Eugen

(56) References cited:
- DE-C1- 4 339 761
- US-A- 4 350 361
- US-A- 4 666 071

## Description

The current invention relates to a carrier rack which is provided for a two wheeled vehicle, in particular a bicycle.

### Background to the Invention

Carrying racks, or simply carriers, for cycles are well known in the art for attachment to the cycle frame so as to allow the user of the bike to carry items of luggage without having to use their hands. Further, it is known for such carriers to be adapted so that further specific carrying elements, such as a child's seat for instance, can be attached to the base carrier. Most carriers that are adapted for attachment to the cycle over the rear wheel are possessed of three supports: two which extend to a fixing point either side of the rear wheel, and which are designed to take the weight of the carrier and items in transit, with a third which is provided for stabilising motion of the carrier around these two fixing points. These supports attach the actual carrier top to the frame of the cycle, wherein the carrier top is commonly of the form of a base made from a rigid plastic or a tubular frame, to which elements of luggage can be attached using ropes, straps, string or the like.

Most designs of carrier, however, are directed toward permanent fixture to the cycle. Whilst this can be acceptable to some users, there are occasions where it is desirable to remove the carrier from the bike. This is perhaps the case when the carrier is to be to remove the carrier from the bike. This is perhaps the case when the carrier is to be used with a so called mountain bike, wherein many users enjoy using the cycle in "off road" conditions, for instance on dirt tracks in the countryside or through woodland. In such situations, it is desirable to remove the carrier from the cycle as it adds unnecessary weight and also poses the risk of being caught on vegetation which could lead to either carrier damage or in more serious situations, the user crashing the cycle.

It is an object of the current invention, therefore, to provide a carrier for attachment to the frame of a cycle in such a manner that it can readily be removed without the requirement of general or specialised tools. Furthermore, it is desired that such a carrier be quickly and easily attachable to or detachable from the cycle. Finally, it is preferable that the carrier be readily adjustable, such that it can easily be adapted for a wide range of cycle designs, again without the use of tools.

US 5,803,329 discusses a carrier which is intended for use on a cycle, and which is possessed of a fixing mechanism which does not require the use of tools. Herein, the mounting points either side of the rear wheel are provided by nuts permanently affixed to the cycle frame. These nuts are possessed of two partial shoulders which extend radially outward at the side of the nut removed from the cycle frame, to provide two lugs. These are designed to interact with appropriately shaped cut outs at the bottom end of the carrier supports, such that the carrier is rotated 90° back from its normal position and the provided cut outs are guided over the nuts and lugs. The carrier is then rotated into its normal position so that the cut outs in the carrier supports and the lugs on the nuts are out of alignment and the carrier is fixed in position. Finally, the carrier is fixed to the seat stem by use of a third connector which fixes around the tubing.

### Summary of the Invention

The above detailed problems are solved by the carrier according to claim 1, with the dependent claims thereof giving preferred embodiments to the invention.

A carrier for a bicycle is disclosed which comprises a carrier top and rear axle mounts. The carrier top is connectable to one or more supporting members which are attachable to the carrier and extend from the carrier toward the rear axle mounts. These axle mounts are fixed to the frame of the bicycle to provide a pin which engages with the supporting members via a slot in the end of each of these members. The slot is shaped for sliding over the pin and fixing the carrier assembly to the bicycle. Further, a front connector is provided, which is fixed to the frame of the bicycle in a position forward of the rear axle. This connector is for attaching the front of the carrier to the bicycle to give support and to stop the carrier from rotating about the rear axle mount. The carrier and front connector are interconnected by means of an adjustable securing rod, which is secured in a removable manner to the carrier top. This rod extends from the carrier top, such that its second end can be positioned and held within a channel provided in the front connector to secure the carrier, with the channel lying in a direction which is perpendicular to the direction of motion of the bicycle. This further means, that the carrier can be fitted to a variety of bicycle designs.

### Description of the Figures

**Figure 1** demonstrates a carrier according to the present invention attached to the frame of a bicycle.
**Figure 2** details an expanded view of the mounting members and rear axle connector.
**Figure 3** shows the front connector in expanded form.
**Figure 4** is an exploded diagram of the carrier, showing the carrier top.
**Figure 5** shows a carrier top with an integrated wire frame.
**Figure 6** details the carrier top with seat base adapter.
**Figure 7** illustrates the seat base with wedge securing pieces and a hand operated cam wheel.
**Figure 8** is a cross section through the seat base engaged with the carrier top.
**Figure 9** shows the seat base and cradle with suspension, in exploded form.

### Description of the Preferred Embodiment

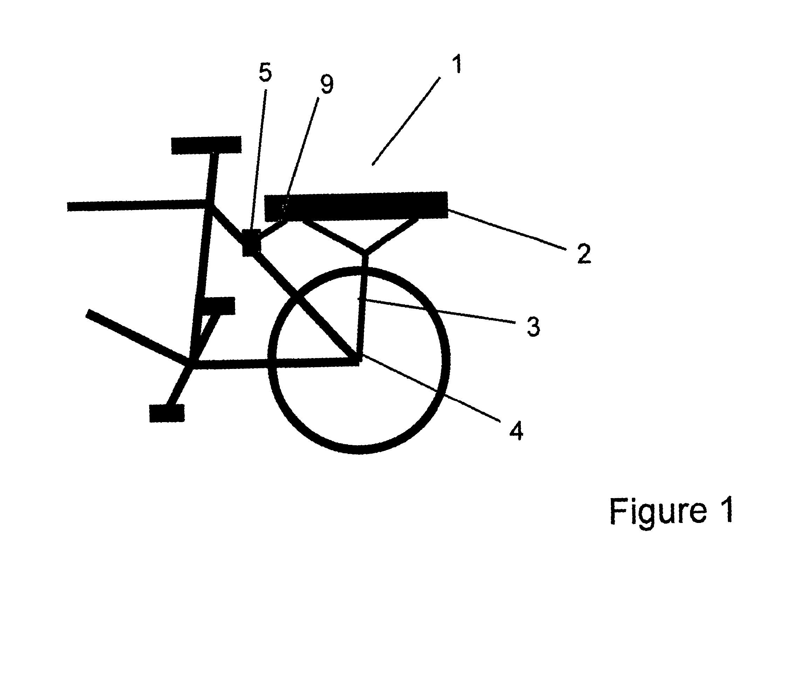

With reference to figure 1, a carrier (1) for a bicycle according to the present invention is shown attached over the rear wheel of a bicycle. The bicycle carrier (1) comprises a carrier top (2), which can either be used as it appears in the figure as a simple bicycle carrier (1), or it can be integrated with further components which are described in detail below. Attached to this carrier top (2) in a removable manner, are one or more supporting members (3) which extend from the carrier top (2) to mounting points (4) provided on the cycle frame for supporting the carrier (1) and load. The mounting points (4) are positioned in the close vicinity of the rear axle of the bicycle, as is shown in figure 1, and are designed to be fixed to the bicycle and left in place when the carrier (1) is not being used.

It is envisioned, that the mounting points (4) will be fixed to the frame of the bicycle using either a screw or a nut and bolt arrangement, utilising an eyelet in the bicycle frame provided for the connection of cycle carriers. Should no such connection point exist, it is a straightforward matter to drill a hole of suitable size in the frame of the bicycle, at the point which extends around the rear wheel axle to fix the wheel to the frame. It is further possible, that the mounting point (4) be integrated with the axle of the rear wheel, and be positioned around the axle between the hub of the rear wheel and the inner side of the frame.

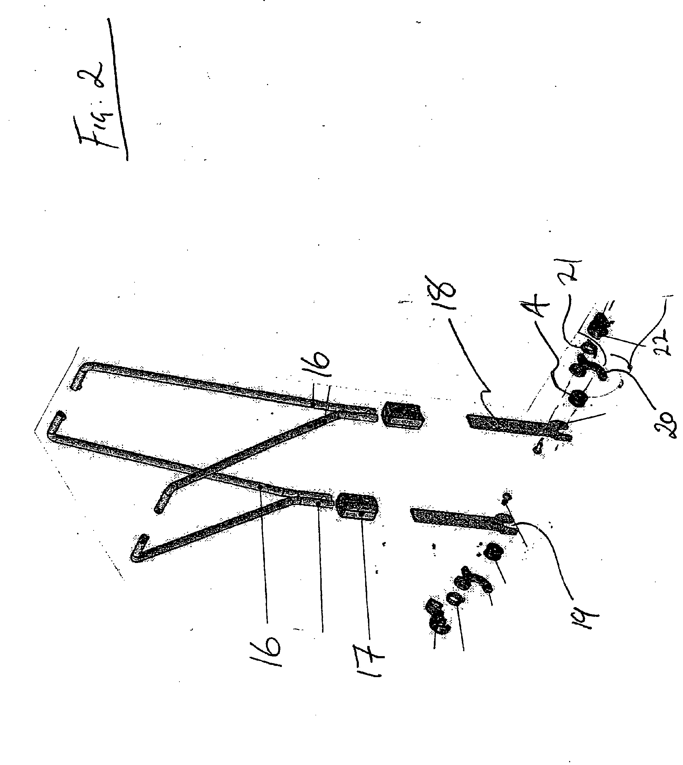

In order for the cycle carrier (1) to be readily attached and removed from the cycle frame, the rear mounting points (4) provide a pin for interacting with the lower end of the supporting members (3), this is best seen in figure 2. The lower end of the supporting members (3), are provided with slots (19) which are designed to accommodate the pin of the mounting points (4). When fitting the carrier (1) to the bicycle, all that is required to ensure a secure load bearing connection, is to slide the slots (19) at the end of the supporting members (3) over the pins provided by the mounting points (4). As a modification to the mounting points (4), and so as to stop sideways movement of the supporting members (3) from disengagement with the pin, the mounting points (4) can be provided by mushroom connectors. These mushroom connectors are cylindrical in shape, and are provided with a bore which extends through the central axis of the connector to be used for fixing to the bicycle. The outer surface of the connector varies in diameter along its length in a step wise manner, so that at either end of the connector the diameter is greater than in the middle. This, therefore, provides a connector which has an "H" profile, wherein the slots (19) at the end of the supporting members (3) are designed to fit within the region of reduced diameter and thereby be prevented from slipping off the mounting point (4).

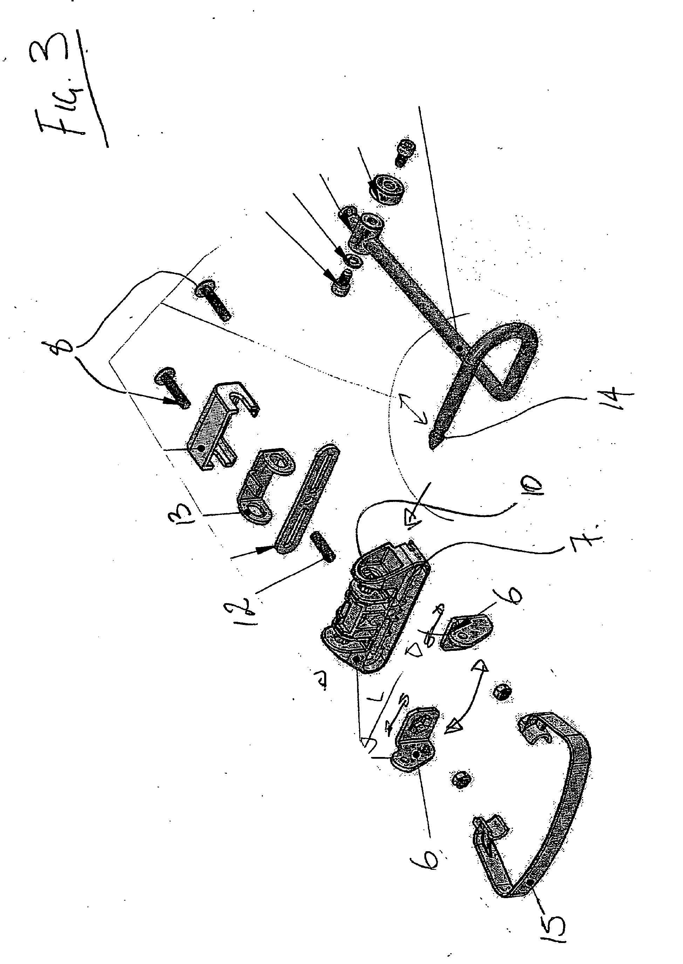

To further fix the carrier (1) to the frame of the cycle, there is provided a front connector (5) which is positioned at a point forward of the mounting points (4). This front fixing point is designed and provided to stop rotation of the carrier (1) around the rear axle mounting points (4). The front connector (5) can be most clearly seen in figure 3, which shows an expanded view of the key components of the connector (5). As with the rear axle mounting points (4), this front connector (5) is intended to be semi-permanently fitted to the frame of the cycle, and left in place when the rest of the carrier (1) has been removed. Shown in figure 3, are two brackets (6) which are provided to fix the front connector (5) to carrier fixing points provided on the rear wheel forks of most cycles. Shown in the diagram are L-shaped brackets, although it is to be understood that the brackets (6) are not limited to these, and can be changed for simple plate brackets depending upon the fixing points on the cycle. The fixing brackets (6) are adjustably attached to the front connector (5) to accommodate a variety of widths in the bicycle side fixing points. As can be seen in figure 3, two slots (7) are provided passing through the body of the front connector (5) through which bolts (8) are passed for engaging with the fixing brackets (6) at the desired spacing.

As shown in figure 1, the carrier (1) is attached to the front connector (5) by means of an adjustable securing rod (9). This rod (9) is fixable at one end to the carrier top (2) in a removable and adjustable manner, so that the carrier can be used with a variety of bicycle designs and shapes. At the carrier top (2) the securing rod (9) either engages with one of a plurality of fixing points which allow it to be rotationally secured, or with a track which runs along the length of the carrier top (2) to which the rod (9) is clamped, again allowing for rotation of the rod (9) to accommodate different cycle frame designs. The securing rod (9) is engaged with the front connector (5) via a bore (10), which passes through the body of the connector (5). This bore (10) passes through the connector (5) in a direction which is substantially perpendicular to that between the carrier (1) and the front connector (5). In this manner, it is only required for the rod (9) to be bent into a configuration that will allow one end to slide into the bore (10) with the other being attached to the carrier top (2), so as to fully secure the carrier (1) and stop it from rotating around the rear axle mounting points (4).

For increased security in the above described fixing between the rod (9) and the front connector (5), a locking mechanism is provided. As is shown in figure 3, this locking mechanism is in the form of a button (11), which is biased by means of a spring (12). The actual locking mechanism is formed by a plate (13) which has 2 right angle bends in it, wherein the two opposing faces of this plate (13) are positioned within the connector and cross the path of the bore (10). Two holes are provided in these opposing faces in appropriate positions, so that when the plate (13) is fully engaged within the front connector (5) these holes align with the bore (10). Under the influence of the spring (12), however, the plate (13) is pushed out of the connector (5) body, and the holes on the plate become misaligned with the bore (10). As is shown in the figures, if the end of the rod (9) engaging with the front connector (5) is provided with a groove (14) toward its end, the edge of one of the holes in the biased plate will slot into this groove (14), when the rod is fully within the connector. Indeed, as the bore (10) is accessible from both sides, it is necessary to provide the locking mechanism working with both orientations of the rod (9); this is achieved by use of the plate (13) crossing the bore (10) in two positions. This provides an additional security feature in that, whilst the rod (9) is being inserted into the bore (10), the groove (14) will engage with the first side of the plate (13) and will therefore be stopped from slipping out again. Pressing of the button (11), will then allow the groove (14) to be disengaged from the holes in the plate (13) and the end of the rod (9) can be fully inserted within the bore (10). Clearly, the above double locking mechanism works in reverse: should the rod (9) become dislodged from the hole in the first side of the plate (13) and slide outward of the front connector (5), the groove (14) will be engaged with the second side of the plate, and will therefore be retained. In order to facilitate sliding the rod (9) into the bore (10) for engagement, it is possible to chamfer the relevant end, or even provide it with a point.

As can be seen in figure 3, the front connector further includes a safety strap (15). This strap (15) is attached to the front connector (5) via the bolts (8), and is designed to pass around the back of the frame of the bicycle to which the connector (5) is attached. In this way, should the fixing mechanism holding the front connector (5) to the frame fail, the front connector (5) will still remain fixed to the frame and will not allow the carrier (1) to rotate or become unattached. Whilst the diagram has shown this safety strap (15) connected through the bolts (8) used for adjusting the width of the fixing brackets (6), any other method of securing the strap (15) to the front connector (5) around the frame is believed as being considered obvious by the skilled man and falling within the scope of the design. For instance, the strap (15) could be attached to the connector (5), and when the connector (5) is fixed to the frame the strap (15) is passed around the frame and the two ends are connected together, by means of a buckle or a clip, for instance.

As can be seen from figure 3, a modification to the design of the fixing rod (9), includes it having multiple bends. This design is particularly useful, as it further allows for the carrier (1) to be fastened to a wider range of cycles. The rod (9) in fashioned is such a manner, that the direction of the central axis at each end of the rod (9) lies perpendicular to each other, which therefore allows one end to fasten to the carrier top (2) with the other being engaged in the front connector (5). Secondly, these two axes do not lie in the same plane as each other and are separated by a chosen distance. In this manner, when the rod (9) is inserted into the bore (10) of the front connector (5), by choosing which side to insert from, the height of the rod (9) can be adjusted. This adjustment is designed to allow for different frame designs, wherein the relationship between the front connector (5) frame attachment points and the height of the carrier top (2) above the rear wheel differs.

In order to allow the carrier (1) to be fixed to a variety of cycles, the length of the supporting members (3) attached to the carrier top (2) can be varied. This is most simply achieved by the system as shown in figure 2. Herein, two sets of rods (16) are shown which extend from the carrier top (2) to a height adjusting block (17), to be held within. Whilst the diagram shows four rods grouped in pairs, it is to be understood that this is by way of example only, and that more or fewer can be used if so required. Furthermore, whilst it is envisioned that these rods be made from aluminium for both lightness and strength, it is clearly possible to fabricate them out of a different metal or indeed a rigid plastic. The rods (16) are designed to interact with the carrier top (2) and fasten thereto in a removable manner, and are shown in the figures attached to the underside of the top (2). Other designs, however, which fulfil the same function are clearly possible, and that shown in the figure is intended as one possible solution.

The height adjusting block (17), to which the lower end of the support rods (16) are attached, further interacts with a height plate (18), which has at its lower end the slot (19) for sliding over the rear mounting point (4). The height plate (18) comprises a rigid plate of metal which has a series of holes spaced out along its length, such that when the slot (19) is in position around the rear mounting point (4) the holes extend in an upward direction. The height adjusting block (17) is possessed of a slot which is sized to accept the height plate (18); further, the block (17) is provided with a fixing pin which engages with the desired hole, and thus positions the adjusting block (17) at the desired height.

Whilst the engagement of the slot (19) in the height plate (18) over the rear mounting point (4) is a straightforward method of attaching the rear of the carrier (1) to the frame of the bike, it requires a locking mechanism to stop the motion of the bike from bouncing the carrier (1) out of the mount (4). This is most readily achieved by providing a clip (20) at the end of the height plate (18), for sliding underneath and around the rear mounting pin (4), and in this way securing the plate (18). Such a clip (20) would be affixed in a rotatable manner to the end of the height plate (18), on one of the arms either side of the slot (19). Once the height plate (18) is engaged with the rear mounting point (4), the clip (20) can be rotated from its open position allowing access to the slot (19) to the closed position, wherein it passes under the rear mount (4) and stops the height plate (18) from disengaging as a result of the motion of the cycle. As an additional feature, it is possible to bias this clip (20) by means of a spring (21), thereby ensuring that the clip is always engaged with the rear mounting point (4), and as such increasing the security of the locking mechanism. Moreover, to maintain this clip (20) assembly in good working order, and avoid its degradation from either physical knocks or from dirt and/or oil, a protective cap (22) can be provided to cover the clip (20) and spring (21).

The above disclosed arrangement for attaching the carrier (1) to a cycle, means that one carrier (1) can be used with a range of cycles. This is particularly desirable when multiple users, say within a family, wish to use just one carrier (1). Provision of multiple front connectors (5) and rear axle mounts (4) attached to several cycles, in addition to the above disclosed adjustable support members (3) and securing rod (9), leads to a carrier (1) which can readily be moved from one cycle to another.

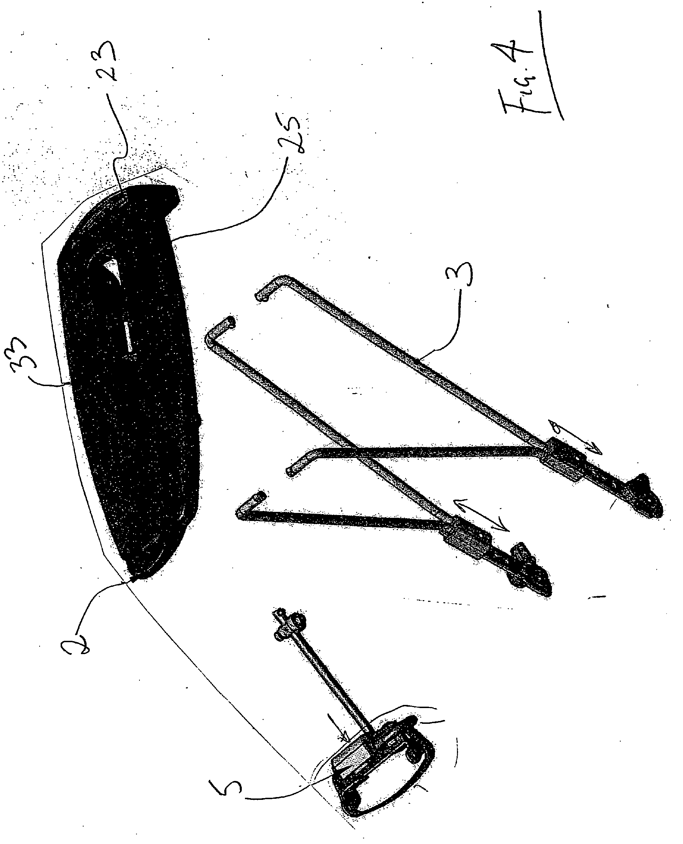

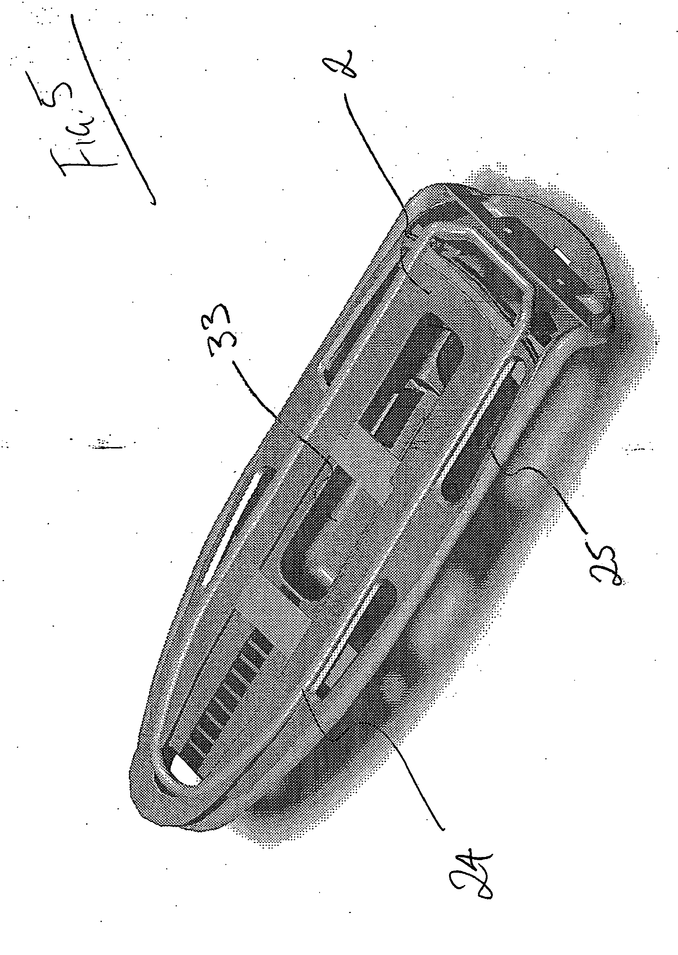

Figure 4 is an exploded diagram detailing how the carrier top (2), the front connector (5) and the supporting members (3) are disposed to make the basis of the carrier (1). As shown in this figure, the preferred number of supporting members (3), each of which comprises a pair of rods (16), is two, that is: one either side of the rear wheel. Further provided on the carrier top (2) is one half of a dovetail joint (23), for the secure connection of further carrier elements as detailed below. Shown in figure 4, is a carrier top (2) which is fully formed as a single unit, preferably out of a rigid plastic material, in which the half dovetail joint (23) is positioned toward the outer edge of the top (2). Another possible method of providing one half of a joint for attachment of further carrier elements, is shown in figure 5, wherein a rigid wire (24) is situated above the carrier top (2) upper surface in a loop. This rigid wire loop (24) provides a fixing point which can be treated as one half of a dovetail joint, as in the case where the carrier top (2) is formulated from a single unit. The loop can also be used for attaching items to the carrier in the same way as the slots (25), which can be seen in figures 4 and 5, passing through the carrier top (2), securing the items by means of straps, rope, string or the like.

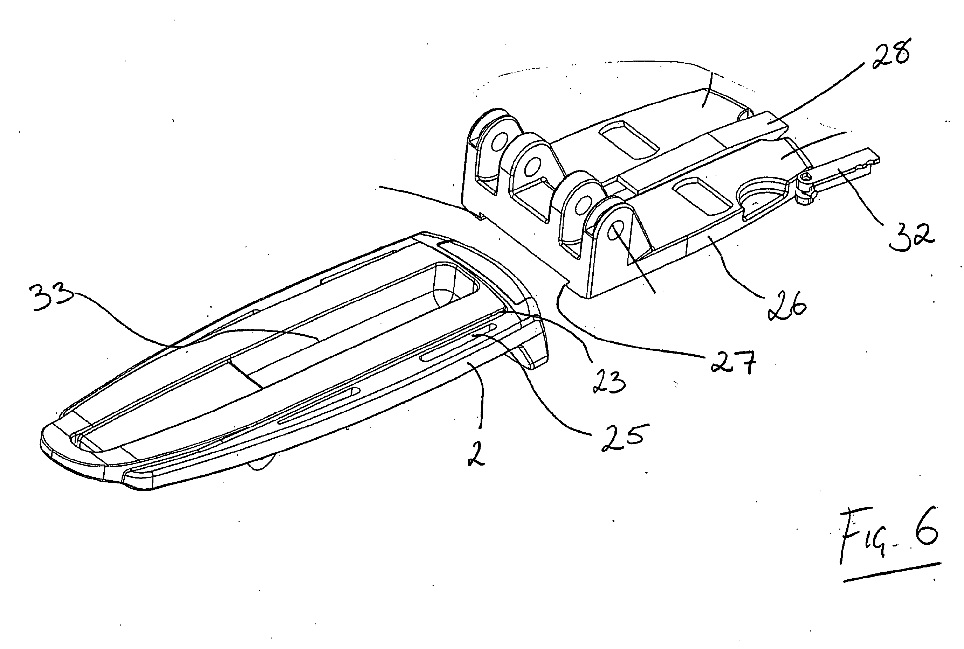

The half dovetail joint in the carrier top (23), is specifically intended for interfacing the carrier top (2) with further elements of the carrier (1); figure 6 shows one such element in the form of a seat base (26). This seat base (26) is designed such that its underside has a half dovetail joint (27) which is the matching half of the carrier top dovetail joint (23). Attachment of the seat base (26) to the carrier (1), is by the simple sliding of the seat base (26) over the carrier top (2) such that the two halves of the joint engage. In the case that the carrier top (2) has a wire loop for the attachment of the seat base (26), the seat base (26) slides over this for attachment. Whilst the figures show the carrier top (2) being possessed of the tenon to the joint, in the case of the wire loop carrier (24) the seat base (26) has the mortise which slides over and around the loop, it is equally possible for these to be reversed. In this situation, the carrier top (2) has a dovetail shaped recess into which a tenon on the seat base (26) can slide; the wire loop carrier (24) is adapted so that the seat base tenon slides between the two sides of the loop to engage therewith.

The dovetail joint between the carrier top (2, 24) and seat base (26) clearly stops the two elements from disengaging vertically, but there remains the possibility of the base (26) sliding off from the carrier (2). In order to obviate this problem, the seat base (26) can be fitted with at least one hand operable locking mechanism. Two solutions for this locking system are presented: a mechanism for causing the two halves of the dovetail joint to be gripped together so as to remove any play from the joint and stop the sliding disengagement; and a rotatable safety lock (28) which is connected to the seat base (26), and has projections that extend below the bottom of the seat base (26) to interact with the carrier top (2, 24). It is conceived that one or both of the above locking systems be fitted to the carrier (1) of the present invention, although with a well fitting dovetail joint (23, 27) it is possible that neither would be necessary.

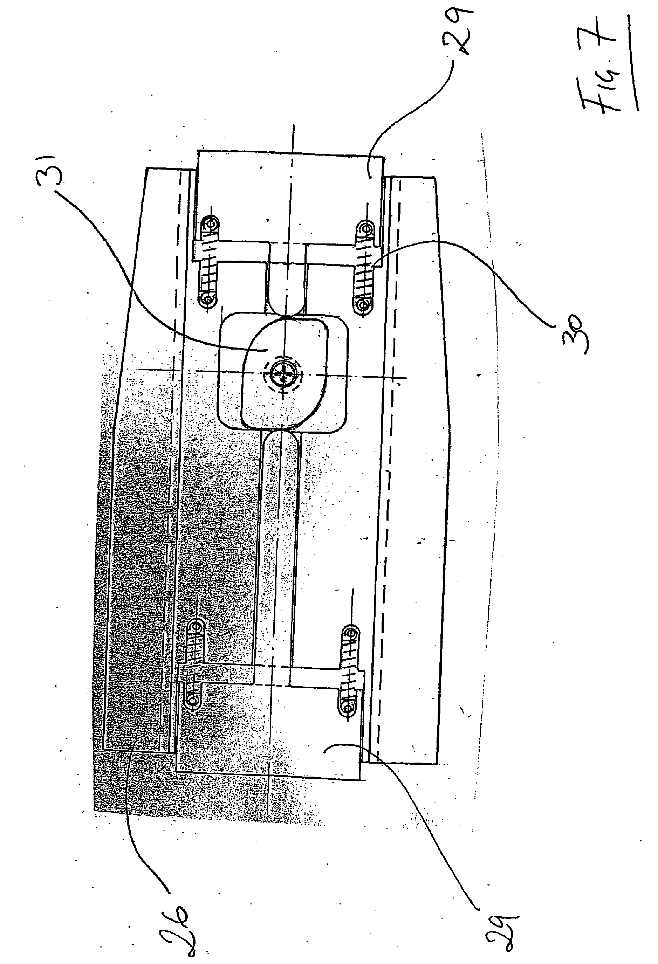

Several solutions exist for removing the play from the dovetail joint, either the two halves are forced apart vertically, so that the tenon is forced into tight engagement with the mortise, or the seat base (26) is formed such that it can be deformed slightly and act so as to grip the carrier top (2, 24), or the rods of the loop carrier (24) can be moved to grip the seat base (26). The method of forcing the two halves of the joint apart, is best achieved by providing 2 wedges (29), see figure 7, which fit within the dovetail joint in between the seat base (26) and the carrier top (2). These wedges (29) are biased, with the aid of springs (30), pulling them together toward the centre of the carrier top (26). The wedges (29) are oriented so that the narrow portions face each other, and when they are pulled together by the biasing springs (30), thicker and thicker portions are introduced into the gap between the two halves of the joint and thus it is pushed apart and more securely held. In order to remove the wedges (29) from the joint, and allow the seat base (26) to be removed from the carrier top (2), a cam wheel (31) is mounted within the seat base (26) such when it is rotated, it acts upon linear extensions of the wedges (29) and pushes them apart. This cam wheel is provided with a grip and is intended to be hand operated. Clearly, the cam wheel (31) must be in the position that forces the two wedges (29) apart for mounting or removal of the seat base (26) onto the carrier top (2). As the wedges act upon the carrier top (2), this method is particularly suited to the solid carrier top (2), rather than the wire loop top (24).

Secure fixing of the seat base (26) by deformation, requires that this base (26) is formed from a piece of plastic in the shape of a "U"; that is, it has two extending arms which are separated by a small gap. When the seat base (26) is positioned in the carrier top dovetail joint (23), these two arms are either squeezed together or pushed apart by hand operated means and therefore secure the dovetail joint. Shown in figure 6 is a locking lever (32), which has an extension passing through one of the seat base (26) arms to be secured in the other. This design is appropriate for when the carrier top (2) has the tenon of the dovetail joint, whether provided in the moulded plastic carrier top (2) or the carrier top possessing the rod loop (24), and the seat base (26) the mortise. As the lever (32) has an eccentric mounting point at one end of the extension, when it is rotated it acts upon the side of the seat base (26) and pushes the first arm toward the second, and in so doing grips the carrier top tenon (23). Whilst in the figure a lever (32) is shown, it is clear that other systems exist, such as a hand operated screw thread, which upon rotation pushes the two arms of the seat base (26) together. Additionally, in the system which employs a wire loop carrier top (24), it is possible to bias the rods outward so as to engage more tightly with the mortise of the seat base (26) and so secure the joint. This could be achieved by means of a hand operated screw thread, which upon rotation acts to force the rods apart.

When the converse system to that above is utilised, that is where the seat base (26) presents the tenon of the dovetail joint, to either fit within a moulded mortise in the carrier top (2), or within the rods of the carrier (24), a different locking mechanism is required. In this case, it is possible to still utilise the seat base (26) formed as a "U", as detailed above, however, instead of using a system to push the two arms together, the biasing is required to pull the two arms apart and so engage the two halves of the dovetail joint in tight connection. The simplest method of performing this task, is by providing a screw thread which passes through one of the arms and impinges upon the other. Rotation of the screw in the appropriate direction, will drive the end of the screw into the second arm of the seat base (26) and force the two apart and into tight engagement within the joint. It is also possible, to have a screw thread engaged with both arms, wherein each half has a thread of opposite thread direction, such that rotation will cause both arms to be forced apart. An additional method of gripping the tenon on the seat base (26) is possible, if the carrier top (24) has the rigid wire loop configuration. Here, when the tenon is engaged between the rods, application of a force to move the rods together will grip the seat base (26) firmly to the carrier top (24). This gripping force could most readily be achieved by means of screw thread operated clamps attached to each of the rods.

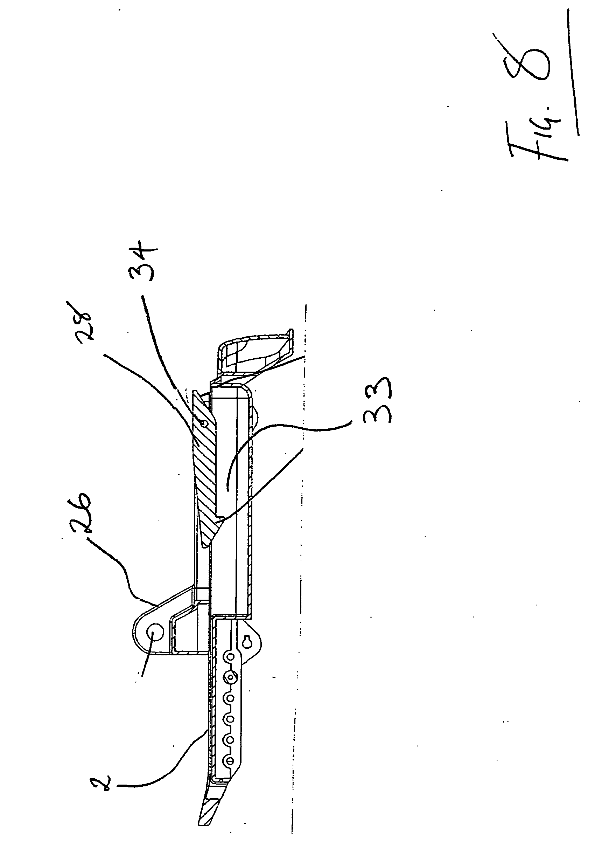

Figure 6 shows the relative positioning of the safety lock (28), if present, within the seat base (26) for further ensuring that it does not accidentally disengage from the carrier top (2, 24). Figure 8, shows a cross section through the engaged carrier top (2) and seat base (26) taken along the line A-A in figure 6. Clearly visible is the projection from the safety lock (28) which extends below the bottom surface of the seat base (26) to engage with a resilient side of a recess (33) in the carrier top (2). This recess (33) can be more clearly seen in figure 6. As the seat base (26) is slid into engagement with the carrier top (2), the safety lock (28) rotates around the pivot point (34) and the projection end rises out of the dovetail joint region, until the recess (33) is reached. At this point, the projection drops down to engage the locking mechanism and prevents the seat base (26) from sliding back and disengaging from the carrier top (2). Whilst it is possible to allow this lock to work under the force of gravity alone, it is preferable to spring bias the rotation of the member to ensure that the lock (28) properly engages, and further prevent the motion of the cycle from bouncing it out of position.

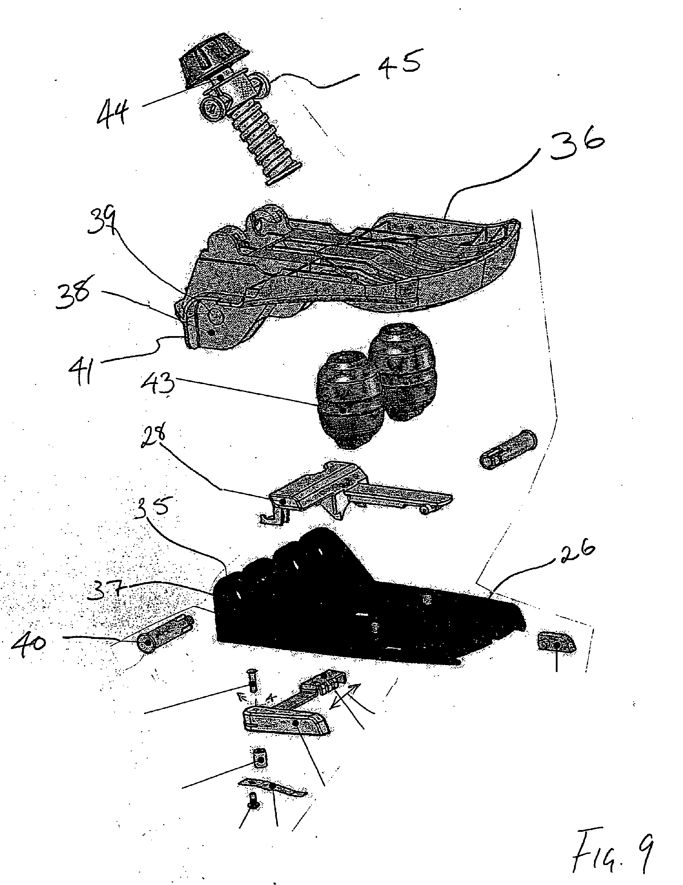

Figure 9 shows the seat base (26) of figure 6 with additional elements of the seat for integration with the carrier (1). As can be seen in the figure, the seat base (26) is possessed of a series of projections (35) extending upward at one end of the base (26).

Preferably, these projections (35) are formed such that they are positioned at the front of the carrier (1) when it is fixed to the cycle, although this is not necessary. These projections (35) provide one half of a rotatable hinge for integration of further seat elements, such as the cradle (36) shown in figure 9. Through the projections (35) in the seat base (26) are a series of holes (37) which each align along a central axis in a direction perpendicular to the direction of motion of the cycle. As can be seen in figure 9, the underside of the cradle (36) is provided with a second set of projections (38) with holes (39) through. The two sets of projections (35, 38) are so designed as to interdigitate with each other such that the sets of holes (37, 39) align and with insertion of a split pin (40) form a hinge. This pin (40) can be formed in many ways, as two halves of a single pin (40) which after insertion into the holes (37, 39) are joined together; or as two shorter pins (40) which fit through half of the interdigitated projections (35, 38) only, and which form into the hinge in this manner. If the two separate pin (40) option is utilised, the inserted end is provided with a deformable section which after insertion through the holes (37, 39), stops the accidental removal of the pin (40) from the hinge.

The provision of a hinge section between the seat base (26) and the cradle (36) is so that a suspension system can be incorporated between these two elements. It is desirable, however, that the cradle (36) cannot rotate too far forward away from the seat base (26), as this could lead to a further element attached to the cradle (36) tipping too far forward, which could prove dangerous. In order to stop this from occurring, the cradle (36) has formed shoulders (41) which match the contour of the seat base projections (35). These shoulders (41) are positioned around the seat base projections (35) and will only allow the cradle (36) to rotate so far away from the seat base (26). As can be seen in figure 9, the cradle unit (40) is provided with attachment points on its upper surface which are used for attachment of further carrier elements. Such elements could be, but are not limited to, a child's seat (42) or other carrying units, such as a box.

In order to improve the ride comfort for a child using the child's seat (42), or for reducing the number of potentially content damaging bounces the carrier unit suffers during the use of the cycle, suspension blocks (43) can be placed between the rotateably interconnected seat base (26) and cradle (36). These suspension blocks (43) are preferably made from rubber, as this is a naturally deforming substance with long durability, however, any appropriate elastomeric substance could be used. As a further option, the positioning of these blocks (43) with respect to the hinge point, can be altered so as to adjust the suspension effect. These suspension blocks (43) are either held within specific fixing points provided on the top surface of the seat base (26) and corresponding points on the lower surface of the cradle (36), or a fixing track is provided on each of these carrier elements so as to allow the positioning of the block in a range of places to give a truly variable suspension effect.

Further shown within figure 9, is an adjustment spindle (44), which can further be used to alter the level of travel available between the cradle (36) and the seat base (26). The spindle (44) shown, has a screw thread which is in threaded engagement with a nut (45); this nut (45) being held within the cradle (36). At one end of the spindle (44) is a hand operated grip for rotation of the thread to adjust the position of the spindle (44) with respect to the nut (45), with the other end of the spindle (44) resting on the seat base (26). Clearly, with this arrangement, rotation of the spindle (44) will drive the one end into the seat base (26) and thereby adjust the amount of rotation which is possible between the cradle (36) and the seat base (26). Whilst a nut (45) is shown in the figure, it is also possible that the cradle (36) be possessed of a threaded section for attachment of the spindle (44), thereby removing the need for a separate nut (45).

A further requirement of the spindle (44), is to integrate with the further elements which are attached to the cradle (36), be these the child's seat (42), storage boxes or the like. The hand operated end of the spindle (44) is required to be accessible when the further elements are attached, whilst additionally not getting in the way of the functioning of the elements. A further function that the spindle can perform, is to provide another fixing point between the seat (42) or storage element, and the cradle (36). In order to achieve this, the spindle is housed within the seat (42) or storage element, such that it can be rotated to allow adjustment of the suspension, whilst still connecting the element to the cradle (36).

While various features and embodiments of the invention are described above, they can readily be combined with each other resulting in further embodiments of the invention.

## Claims

1. A carrier (1) for a bicycle comprising:
a carrier top (2);
rear axle mounts (4);
wherein the carrier top (2) is connectable to one or more supporting members (3) which are attachable to the carrier top (2) and extend from the carrier top (2) toward the rear axle mounts (4), these axle mounts (4) being fixed to the frame of the bicycle and providing a pin which engages with the supporting members (3) via a slot (19) in the end of each of the members (3) the slot (19) being shaped for sliding over the pin and fixing the carrier assembly to the bicycle;
a front connector (5) is provided, which is fixed to the frame of the bicycle in a position forward of the rear axle, for attaching the front of the carrier top (2) to the bicycle to give support and to stop the carrier (1) from rotating about the rear axle mount (4); wherein,
the carrier top (2) and front connector (5) are interconnected by means of an adjustable securing rod (9) which is secured in a removable manner to the carrier top (2), the rod (9) extending from the carrier top (2) such that its second end can be positioned and held within a channel (10) provided in the front connector (5) to secure the carrier (1) whilst further meaning that it can be fitted to a variety of bicycle designs, the channel (10) lying in a direction which is perpendicular to the direction of motion of the bicycle.

2. The carrier (1) of claim 1, wherein the front connector (5) further comprises:
brackets (6) for attaching the connector (5) to the carrier connection points on the frame of the bicycle via screws or bolts, wherein the distance between the two brackets (6) can be adjusted to accommodate a variety of widths of connection points.

3. The carrier (1) of claim 1, wherein the front connector (5) further comprises:
a bracket for extending around one or more of the tubes of a bicycle in order to grip the tube between the bracket and the main body of the front connector (5) to attach it to the frame;
the fixing bracket being attached to the connector (5) via a hinge at one side, and being connectable to the connector (5) on its other side via means of a hand operable mechanism.

4. The carrier (1) of claims 1 to 3, wherein the channel (10) of the front connector (5) comprises:
a bore (10) extending through the full length of the body of the connector (5) with a diameter that is large enough to accommodate the securing rod (9), whilst further allowing the end of the rod (9) to be inserted into either end of the bore (10).

5. The carrier (1) of claims 1 to 4, wherein the front connector (5) further comprises:
a safety lock disposed along the length of the bore (10), such that when the securing rod (9) is fully inserted within the connector (5) it is locked in place and cannot slide out.

6. The carrier (1) of claim 5, wherein the safety lock comprises:
a plate (13) with two right-angle bends in it to form a "U" shape, with holes of the same size as the bore (10) drilled through the opposing portions of the plate (13),
slots (7) in the connector (5) which are shaped and positioned to accept the opposing portions of the locking plate (13), and which extend perpendicular to the axis of the bore (10) and cross its path, wherein,
the holes in the locking plate (13) are positioned such that when the opposed portions of the plate (13) are inserted into the slots (7), the holes align with the bore (10),
the plate (13) further being biased by means of a spring (12) to push the holes out of alignment with the bore (10),
the end of the securing rod (9) for inserting into the connector (5), being provided with a groove (14) at the appropriate position so that it can interact with the biased plate (13) such that the inside edge of the hole will be pushed into the groove (14) and the rod (9) will be secured in place.

7. The carrier (1) of claims 1 to 6, wherein the front connector (5) is further provided with a safety strap (15), this safety strap (15) being secured to the body of the connector (5) in a removable fashion, and being positioned such that it extends around the back of the connector (5) for encircling the section of frame to which the connector (5) is fixed, thereby ensuring that if the primary fastening mechanism fails, the connector (5) remains connected to the bicycle and the carrier (1) remains secure.

8. The carrier (1) of claim 1 to 7, wherein the securing rod (9) is secured to the carrier top (2) either at one of a plurality of integrated fixing points, or to a fixing track which is provided with a hand operable clamping mechanism.

9. The carrier (1) of claims 1 to 8, wherein one end of the securing rod (9) is provided with a fastening mechanism for removable connection to one of the integrated fixing points on the carrier top (2), wherein the fastening mechanism provides a means for allowing the rod (9) to rotate around the fixing point in a vertical direction, as defined when the carrier top (2) is attached to the bicycle, thereby allowing the carrier (1) to be secured to a variety of bicycle designs.

10. The carrier (1) of claims 1 to 9, wherein the securing rod (9) is fashioned such that the central axis of the rod (9) at each of the ends lie at 90° with respect to each other,
wherein the two axes do not cross each other and are separated by a preset distance.

11. The carrier (1) of claims 1 to 10, wherein the securing rod (9) has a chamfered end to ease insertion into the front connector (5) and integration through the holes in the locking plate (13).

12. The carrier (1) of claims 1 to 11, wherein the rear axle mount (4) comprises a mushroom connector fastened to the frame of the bicycle, this mushroom connector being cylindrical in shape and possessing an outer diameter which varies in a stepwise fashion along its length, from a larger diameter to a smaller and then back to the first diameter to resemble an "H", thereby providing a fixing means for the support members (3) of the carrier (1).

13. The carrier (1) of claim 12, wherein the mushroom connector comprises a longitudinal bore running the length of the connector and along the central axis, the bore being used to secure the connector to the frame by means of a screw or bolt.

14. The carrier (1) of claim 12, wherein the mushroom connector comprises a longitudinal bore running the length of the connector and along the central axis, the bore being wide enough to be positioned on the real wheel axle, between the frame of the bicycle and the hub of the rear wheel so as to secure the connector to the bicycle.

15. The carrier (1) of claims 12 to 14, wherein the width of the reduced diameter region of the mushroom connector is wider than the width of the support members (3) in the slot (19) region.

16. The carrier (1) of claims 1 to 15, wherein the supporting members (3) include a height plate (18) and an associated adjustment block (17) for adjusting the height of the carrier top (2) above the rear axle mount (4).

17. The carrier (1) of claim 16, wherein the height plate (18) is formed from a rigid strip, at one end of which is the slot (19) for integrating with the pin of the rear axle mount (4) and along its length the plate is provided with a series of holes for adjusting the fastening point between the plate (18) and the height adjustment block (17).

18. The carrier (1) of claims 16 or 17, wherein the height adjustment block (17) comprises a slot for accepting the height plate (18) and for facilitating the slide-able positioning of the block (17) at the desired point on the height plate (18), the height adjustment block (17) being kept in place by means of a pin which passes through the chosen hole of the height plate (18).

19. The carrier (1) of claims 16 to 18, wherein the height adjustment block (17) is attached to one or more support rods which extend from the carrier top (2).

20. The carrier (1) of claim 19, wherein the number of support rods per supporting member (3) is two.

21. The carrier (1) of claims 16 to 20, wherein the height plate (18) further includes a fastening clip (20) attached in a rotatable manner to the end of the plate (18) with the slot (19), the clip (20) being positioned and shaped such that when the slot (19) in the height plate (18) is engaged with the pin, the clip (20) passes around the underside of the pin to restrain the height plate (18) and prevent accidental disengagement.

22. The carrier (1) of claim 21, wherein the fastening clip (20) is spring biased into the locking position.

23. The carrier (1) of claims 21 and 22, wherein the fastening clip (20) is provided with a protective cap (22) to prevent damage to the clip (20) and further to keep the mechanism and spring (21) clean.

24. The carrier (1) of claims 1 to 23, wherein the carrier top (2) comprises a solid base, the underside of which is provided with means for the removable attachment of both the support members (3) and the adjustment rod (9).

25. The carrier (1) of claims 1 to 24, wherein the topside of the carrier top (2) is fashioned to present either the tenon or mortise of a dovetail joint (23) for the slide-able engagement of a seat base (26) which is provided with an appropriately sized counterpart tenon or mortise (27).

26. The carrier (1) of claim 25, wherein a locking mechanism is provided between the carrier top (2) and the seat base (26) to remove any play which might exist in the dovetail joint (23, 27) as a result of manufacturing tolerances.

27. The carrier (1) of claim 26, wherein the locking mechanism takes the form of a pair of wedge shaped blocks (29) which are integrated with the seat base (26) in the region of the dovetail joint (23, 27), the wedge shaped blocks (29) being positioned at either end of the dovetail joint track and biased toward the centre of the seat base (26) with the narrower sections of the wedges (29) oriented in the direction of this bias;
the wedge shaped blocks (29) further positioned such that the sloped face interacts with the seat base (26) body when they are biased inward, and that the wedges (29) are forced within the dovetail joint (23, 27) region to provide a means of separating the seat base (26) from the carrier top (2), thereby forcing the two parts of the dovetail joint (23, 27) together and removing any play between the two sections.

28. The carrier (1) of claim 27, wherein a hand operable rotatable cam wheel (31) is provided in the seat base (26) which interacts with the wedges (29), and provides a means for moving them in the direction opposing the bias so as to remove the wedges (29) from the joint region and allow the slide-able engagement or disengagement of the seat base (26) and carrier top (2).

29. The carrier (1) of claims 1 to 24, wherein the carrier top (2) comprises a series of rods,
wherein two of the rods making up the carrier top (2) are positioned parallel with each other, such that a seat base (26) provided with either the mortise or tenon of a dovetail joint (27) can be slide-ably attached either around or between the parallel rods respectively, to create a dovetail joint.

30. The carrier (1) of claims 25 or 29, wherein the seat base (26) is fashioned in the shape of a "U" with the two arms running parallel with dovetail track in the carrier top (2), a locking mechanism being provided which by means of a hand operable apparatus moves the two arms of the seat base (26) so as to more tightly engage the two parts of the dovetail joint (23, 27) and remove any play from the joint.

31. The carrier (1) of claim 30, wherein the carrier top (2) is provided with the tenon of the dovetail joint and the seat base (26) the mortise, and the locking mechanism acts to force the two arms together so as to more tightly grip the tenon on the carrier top (2).

32. The carrier (1) of claim 30, wherein the carrier top (2) is provided with the mortise of the dovetail joint and the seat base (26) the tenon, and the locking mechanism acts to force the two arms apart so that each half of the tenon of the seat base (26) is more tightly engaged with the mortise of the carrier top (2).

33. The carrier (1) of claims 31 and 32, wherein the locking mechanism is provided by a screw thread and screw through the seat base (26) which, by means of a hand operable rotatable handle, moves the arms of the seat base (26).

34. The carrier (1) of claim 31, wherein the locking mechanism is provided by a rotatable lever (32) which has an eccentric axle point of its rotating member, this lever (32) is mounted on a connector which passes through one arm of the seat base (26) and is fastened to the other; wherein
the locking mechanism is so designed that, upon rotation of the lever (32) and by virtue of the eccentric mounting, one arm is pulled toward the other whilst the other is pushed in the opposite direction so as to bring the two arms together to increase the grip of the seat base mortise on the tenon of the carrier top (2).

35. The carrier (1) of claim 29, wherein the seat base (26) is provided with the mortise of a dovetail joint and means are provided for pushing the parallel rods apart so as to more tightly engage with the seat base (26) and secure it in position.

36. The carrier (1) of claim 29, wherein the seat base (26) is provided with the tenon of a dovetail joint and means are provided for forcing the parallel rods together to more tightly grip the tenon on the seat base (26), securing it in position.

37. The carrier (1) of claims 25 to 36, wherein the seat base (26) is provided with a safety lock (28) which is mounted to the base (26) in a rotatable manner, the safety lock (28) being provided with extensions which pass through the seat base (26) to engage with resilient features on the carrier top (26) underneath, in such a manner that the seat base (26) is prevented from sliding off the carrier top (2) without first rotating the safety lock (28) and disengaging the extensions from the resilient features in the carrier top (2).

38. The carrier (1) of claim 37, wherein the safety lock (28) engages with the carrier top (2) by means of gravity pulling it into position.

39. The carrier (1) of claim 37, wherein the safety lock (28) is biased into the engagement position with the carrier top (2), by means of a spring.

40. The carrier (1) of claims 25 to 39, wherein a plurality of protrusions (35) are provided extending upward from the top side of the seat base (26), these protrusions (35) being shaped and arranged at one end of the seat base (26) so as to form one half of a hinge for attachment of a cradle (36).

41. The carrier (1) of claim 40, wherein each of the plurality of protrusions (35) has a hole (37) passing through it of the same size and sharing the same central axis, this hole (37) being provided for accepting a separable axle pin (40) for the removable attachment of the cradle (36).

42. The carrier (1) of claims 40 and 41, wherein the underside of the cradle (36) is provided with a series of protrusions (38) which integrate and interdigitate with those provided on the top side of the seat base (26) , the cradle protrusions (38) being provided with holes (39) through them of the same size and sharing the same axis such that the two sets of protrusions (35, 38) can be interlocked and the separable axle pin (40) passed through each of the holes (37, 39) to secure the cradle (36) to the seat base (26) via a rotatable hinge engagement.

43. The carrier (1) of claims 40 to 42, wherein the cradle (37) is provided with a shoulder (41) which extends between the protrusions (38) and follows the same contour as the base seat hinge protrusions (35), the shoulder (41) being provided in such a manner as to limit the amount of opening of the hinge between the seat base (26) and the cradle (36), thereby stopping the cradle (36) from tipping too far forward.

44. The carrier (1) of claims 40 to 43, wherein the top surface of the cradle (36) is provided with fittings for the attachment of further carrier elements.

45. The carrier (1) of claim 44, wherein the further element is a child's seat (42).

46. The carrier (1) of claim 44, wherein the further element is a carrying unit, such as a box.

47. The carrier (1) of claims 25 to 46, wherein suspension blocks (43) are provided between the cradle (36) and the seat base (26), so as to dampen the motion of the cradle (36) and any further attached elements, whilst the bicycle is in motion.

48. The carrier (1) of claim 47, wherein the top surface of the seat base (26) and the lower surface of the cradle (36) are further provided with features and fixing points for incorporating the suspension blocks (43).

49. The carrier (1) of claim 48, wherein the features and fixing points allow for the suspension blocks (43) to be positioned in a range of positions with respect to the hinge, so that the effect and extent of the suspension can be adjusted.

50. The carrier (1) of claims 47 to 49, wherein there is further provided an adjustment spindle (44) which has a hand operable grip on one end with the other end resting against the seat base (26), in such a manner that the spindle (44) passes through the cradle (36),
an associated screw thread is provided in the cradle (36) with which the spindle (44) is threadably engaged, the spindle (44) being oriented such that upon rotation the spindle (44) provides a means for fixing the relative positions of the cradle (36) and seat base (26) and removing the suspension effects of the hinge and blocks, or for altering the amount of travel possible between the cradle (36) and the seat base (26) so as to adjust the suspension effect.

51. The carrier (1) of claim 50, wherein the screw thread in the cradle (36) is provided by a removable nut (45) housed within the cradle (36).

52. The carrier of claims 50 and 51, wherein the spindle (44) is further adapted such that it will pass through the body of a child's seat (42) if integrated with the cradle (36) in such a manner that it does not interfere with the seating position of the child, whilst providing a further method of securing the seat (42) to the cradle (36).

## Patentansprüche

1. Gepäckträger (1) für ein Fahrrad, welcher enthält:
eine Gepäckträger-Oberseite (2);
Hinterachsen-Befestigungen (4);
wobei die Gepäckträger-Oberseite (2) an ein oder mehrere Tragelemente (3) verbindbar ist, welche an die Gepäckträger-Oberseite (2) befestigbar sind und sich von der Gepäckträger-Oberseite (2) zu den Hinterachsen-Befestigungen (4) erstrecken, wobei diese Achsen-Befestigungen (4) an den Rahmen des Fahrrads fixiert sind und einen Stift bereitstellen, welcher mit den Tragelementen (3) über einen Schlitz (19) am Ende von jedem der Elemente (3) in Eingriff steht, wobei der Schlitz (19) derart geformt ist, dass der Stift hineingleitbar ist und die Gepäckträger-Anordnung an dem Fahrrad fixiert;
wobei ein Vorderverbinder (5) bereitgestellt ist, welcher an einer Position vor der Hinterachse an dem Rahmen des Fahrrades fixiert ist, um die Vorderseite der Gepäckträger-Oberseite (2) mit dem Fahrrad zu verbinden, um eine Halterung bereitzustellen und zu verhindern, dass der Gepäckträger (1) sich um die Hinterachsen-Befestigung (4) umdreht, wobei
die Gepäckträger-Oberseite (2) und der Vorderverbinder (5) mittels eines einstellbaren Sicherungsbolzens (9) verbunden sind, welcher entnehmbar an der Gepäckträger-Oberseite (2) gesichert ist, wobei sich der Bolzen (9) von der Gepäckträger-Oberseite (2) derart erstreckt, dass sein zweites Ende innerhalb eines Kanals (10) positioniert und gelagert werden kann, welcher in dem Vorderverbinder (5) bereitgestellt ist, um den Gepäckträger (1) zu sichern, wobei er ferner an einer Vielzahl von Fahrradentwürfen befestigt werden kann, wobei der Kanal (10) in eine Richtung ausgerichtet ist, welche senkrecht zur Bewegungsrichtung des Fahrrades ist.

2. Gepäckträger (1) nach Anspruch 1, bei welchem der Vorderverbinder (5) ferner enthält:
Klammern (6) zum Befestigen des Verbinders (5) an die Gepäckträger-Verbindungspunkte an dem Rahmen des Fahrrades über Schrauben oder Bolzen, wobei der Abstand zwischen den zwei Klammern (6) eingestellt werden kann, um einer Vielzahl von Breiten von Verbindungspunkten zu entsprechen.

3. Gepäckträger (1) nach Anspruch 1, bei welchem der Vorderverbinder (5) ferner enthält:
eine Klammer, welche sich um ein oder mehrere Rohre eines Fahrrades erstreckt, um das Rohr zwischen der Klammer und dem Hauptkörper des Vorderverbinders (5) zu ergreifen, um ihn an dem Rahmen zu befestigen;
wobei die Befestigungsklammer über ein Gelenk an einer Seite an dem Verbinder (5) befestigt ist und an ihrer anderen Seite über einen manuell bedienbaren Mechanismus an dem Verbinder (5) verbindbar ist.

4. Gepäckträger (1) nach einem der Ansprüche 1 bis 3, bei welchem der Kanal (10) des Vorderverbinders (5) enthält:
eine Bohrung (10), welche sich durch die volle Länge des Körpers des Verbinders (5) erstreckt, welche einen Durchmesser hat, welcher groß genug ist, um den Sicherungsbolzen (9) aufzunehmen, wobei sie es ferner ermöglicht, dass das Ende des Bolzens (9) in eines der Enden der Bohrung (10) eingesetzt wird.

5. Gepäckträger (1) nach einem der Ansprüche 1 bis 4, bei welchem der Vorderverbinder (5) ferner enthält:
eine Sicherungsverriegelung, welche entlang der Länge der Bohrung (10) angeordnet ist, so dass, wenn der Sicherungsbolzen (9) vollständig in den Verbinder (5) eingesteckt ist, dieser an Ort und Stelle verriegelt ist und nicht herausgleiten kann.

6. Gepäckträger (1) nach Anspruch 5, bei welchem die Sicherungsverriegelung enthält:
eine Platte (13) mit zwei rechteckigen Biegungen, so dass sie eine U-förmige Form ausbildet, in welche Löcher, welche die gleichen Ausmaße wie die Bohrung (10) haben, durch die gegenüberliegenden Abschnitte von der Platte (13) gebohrt sind,
Schlitze (7) in dem Verbinder (5), welche derart geformt und positioniert sind, dass die gegenüberliegenden Abschnitte von der Verriegelungsplatte (13) aufnehmbar sind, und welche sich senkrecht zur Achse der Bohrung (10), und ihren Weg kreuzend, erstrecken, wobei
die Löcher in der Verriegelungsplatte (13) derart positioniert sind, so dass, wenn die gegenüberliegenden Abschnitte von der Platte (13) in die Schlitze (7) eingesetzt sind, die Löcher zu der Bohrung (10) ausgerichtet sind,
wobei die Platte (13) ferner mittels einer Feder (12) vorgespannt ist, um die Löcher aus der Ausrichtung zu der Bohrung (10) herauszudrücken,
wobei das Ende von den Sicherungsbolzen (9) zum Einstecken in den Verbinder (5) mit einer Nut (14) an einer geeigneten Position bereitgestellt ist, so dass es mit der vorgespannten Platte (13) derart zusammenwirkt, so dass die innenliegende Kante von dem Loch in die Nut (14) gedrückt wird und der Bolzen (9) an Ort und Stelle gesichert wird.

7. Gepäckträger (1) nach einem der Ansprüche 1 bis 6, bei welchem der Vorderverbinder (5) ferner mit einem Sicherungsstreifen (15) bereitgestellt ist, wobei dieser Sicherungsstreifen (15) entnehmbar an dem Körper des Verbinders (5) gesichert ist und derart positioniert ist, dass er sich um die Rückseite des Verbinders (5) erstreckt, um den Abschnitt des Rahmens zu umgeben, an welchem der Verbinder (5) fixiert ist, wodurch sichergestellt wird, dass, wenn der primäre Befestigungsmechanismus versagt, der Verbinder (5) an dem Fahrrad verbunden verbleibt und der Gepäckträger (1) sicher verbleibt.

8. Gepäckträger (1) nach einem der Ansprüche 1 bis 7, bei welchem der Sicherungsbolzen (9) an der Gepäckträger-Oberseite (2) entweder an einem von einer Mehrzahl von integrierten Fixierpunkten oder an einer Fixierspur, welche mit einem manuell bedienbaren Klemmmechanismus bereitgestellt ist, gesichert ist.

9. Gepäckträger (1) nach einem der Ansprüche 1 bis 8, bei welchem ein Ende des Sicherungsbolzens (9) mit einem Befestigungsmechanismus zur entnehmbaren Verbindung mit einem der integrierten Fixierpunkte an der Gepäckträger-Oberseite (2) bereitgestellt ist, wobei der Befestigungsmechanismus ein Mittel bereitgestellt, welches es ermöglicht, dass sich der Bolzen (9) um den Fixierpunkt in einer vertikalen Richtung, derart bestimmt, wenn die Gepäckträger-Oberseite (2) an dem Fahrrad befestigt ist, umdreht, wodurch es ermöglicht wird, dass der Gepäckträger (1) an einer Vielzahl von Fahrradentwürfen befestigbar ist.

10. Gepäckträger (1) nach einem der Ansprüche 1 bis 9, bei welchem der Sicherungsbolzen (9) derart entworfen ist, dass die Mittenachsen des Bolzens (9) an jedem der Enden in Bezug zueinander bei 90 Grad liegen, wobei sich die zwei Achsen nicht zueinander kreuzen und mit einer zuvor eingestellten Distanz voneinander getrennt sind.

11. Gepäckträger (1) nach einem der Ansprüche 1 bis 10, bei welchem der Sicherungsbolzen (9) ein abgeschrägtes Ende hat, wodurch das Einstecken in den Vorderverbinder (5) und die Integration durch die Löcher in der Verriegelungsplatte (13) vereinfacht ist.

12. Gepäckträger (1) nach einem der Ansprüche 1 bis 11, bei welchem die Hinterachsen-Befestigung (4) einen Pilzkopf-Verbinder enthält, welcher an dem Rahmen des Fahrrades befestigt ist, wobei dieser Pilzkopf-Verbinder eine zylindrische Form hat und einen Außendurchmesser hat, welcher sich entlang seiner Länge schrittweise von einem größeren Durchmesser zu einem kleineren Durchmesser und dann zurück zu dem ersten Durchmesser verändert, um eine "H-Form" anzunehmen, wodurch ein Fixiermittel für die Halteelemente (3) des Gepäckträgers (1) bereitgestellt wird.

13. Gepäckträger (1) nach Anspruch 12, bei welchem der Pilzkopf-Verbinder eine längs gerichtete Bohrung enthält, welche durch die Länge des Verbinders und entlang der Mittenachse verläuft, wobei die Bohrung dazu verwendet wird, um den Verbinder an den Rahmen mittels einer Schraube oder eines Bolzens zu sichern.

14. Gepäckträger (1) nach Anspruch 12, bei welchem der Pilzkopf-Verbinder eine längs gerichtete Bohrung enthält, welche entlang der Länge des Verbinders und entlang der Mittenachse verläuft, wobei die Bohrung breit genug ist, um an der Hinterradachse, zwischen dem Rahmen des Fahrrades und der Nabe des Hinterrades, positioniert zu werden, um somit den Verbinder an dem Fahrrad zu sichern.

15. Gepäckträger (1) nach einem der Ansprüche 12 bis 14, bei welchem die Breite des reduzierten Durchmesserbereiches des Pilzkopf-Verbinders breiter ist als die Breite der Halteelemente (3) im Bereich des Schlitzes (19).

16. Gepäckträger (1) nach einem der Ansprüche 1 bis 15, bei welchem die Halteelemente (3) eine Höhenplatte (18) und einen dazugehörigen Einstellblock (17) zum Einstellen der Höhe von der Gepäckträger-Oberseite (2) oberhalb der Hinterachsen-Befestigung (4) enthalten.

17. Gepäckträger (1) nach Anspruch 16, bei welchem die Höhenplatte (18) aus einem starren Streifen ausgebildet ist, wobei an einem Ende davon der Schlitz (19) zur Integration mit dem Stift von der Hinterachsen-Befestigung (4) angeordnet ist, und wobei die Platte entlang ihrer Länge mit mehreren Löchern bereitgestellt ist, um den Befestigungspunkt zwischen der Platte (18) und dem Höhen-Einstellblock (17) einzustellen.

18. Gepäckträger (1) nach Anspruch 16 oder 17, bei welchem der Höhen-Einstellblock (17) einen Schlitz zur Aufnahme der Höhenplatte (18) und zur Erleichterung der gleitfähigen Positionierung des Blocks (17) an dem gewünschten Punkt an der Höhenplatte (18) enthält,
wobei der Höhen-Einstellblock (17) mittels eines Stiftes an Ort und Stelle gehalten ist, welcher durch das ausgewählte Loch der Höhenplatte (18) durchläuft.

19. Gepäckträger (1) nach einem der Ansprüche 16 bis 18, bei welchem der Höhen-Einstellblock (17) an einem oder mehreren Haltebolzen befestigt ist, welche sich von der Gepäckträger-Oberseite (2) erstrecken.

20. Gepäckträger (1) nach Anspruch 19, bei welchem die Anzahl von Haltebolzen pro Halteelement (3) gleich Zwei beträgt.

21. Gepäckträger (1) nach einem der Ansprüche 16 bis 20, bei welchem die Höhenplatte (18) ferner einen Befestigungsclip (20) enthält, welcher drehbar an dem Ende von der Platte (18) mit dem Schlitz (19) befestigt ist, wobei der Clip (20) derart positioniert und geformt ist, dass, wenn der Schlitz (19) in der Höhenplatte (18) mit dem Stift in Eingriff steht, der Clip (20) um die Unterseite des Stiftes durchläuft, um die Höhenplatte (18) zu halten und ein versehentliches Loslösen zu verhindern.

22. Gepäckträger (1) nach Anspruch 21, bei welchem der Befestigungsclip (20) über eine Feder in die Verriegelungsposition vorgespannt ist.

23. Gepäckträger (1) nach Anspruch 21 oder 22, bei welchem der Befestigungsclip (20) mit einer Schutzkappe (22) bereitgestellt ist, welche eine Beschädigung des Clips (20) verhindert und den Mechanismus und die Feder (21) ferner sauber hält.

24. Gepäckträger (1) nach einem der Ansprüche 1 bis 23, bei welchem die Gepäckträger-Oberseite (2) eine feste Basis enthält, wobei die Unterseite davon mit einem Mittel zur entnehmbaren Befestigung von sowohl den Halteelementen (3) als auch dem Einstellbolzen (9) bereitgestellt ist.

25. Gepäckträger (1) nach einem der Ansprüche 1 bis 24, bei welchem die Oberseite von der Gepäckträger-Oberseite (2) derart entworfen ist, dass sie entweder den Zapfen oder das Zapfenloch von einer Schwalbenschwanzverbindung (23) für die gleitfähige Ineingriffnahme von einer Sitzbasis (26), welche mit einem geeignet bemessenen Gegenstück des Zapfens oder des Zapfenloches (27) bereitgestellt ist, darstellt.

26. Gepäckträger (1) nach Anspruch 25, bei welchem ein Verriegelungsmechanismus zwischen der Gepäckträger-Oberseite (2) und der Sitzbasis (26) bereitgestellt ist, um ein jegliches Spiel, welches in der Schwalbenschwanzverbindung (23, 27), resultierend aus Herstellungstoleranzen, vorliegen kann, zu entfernen.

27. Gepäckträger (1) nach Anspruch 26, bei welchem der Verriegelungsmechanismus die Form eines Paars von keilförmigen Blöcken (29) annimmt, welche mit der Sitzbasis (26) im Bereich der Schwalbenschwanzverbindung (23, 27) integriert sind, wobei die keilförmigen Blöcke (29) an einem Ende der Schwalbenschwanzverbindungs-Spur positioniert sind und zur Mitte der Sitzbasis (26) hin vorgespannt sind, wobei die schmaleren Sektionen der Keile (29) zur Richtung dieser Vorspannung hin ausgerichtet sind;
wobei die keilförmigen Blöcke (29) ferner derart positioniert sind, dass die Neigungsfläche mit dem Sitzbasis-(26)-Körper interagiert, wenn sie nach innen vorgespannt sind, und dass die Keile (29) innerhalb des Schwalbenschwanzverbindungs-(23, 27)-Bereiches gezwängt sind, um ein Mittel zum Trennen der Sitzbasis (26) von der Gepäckträger-Oberseite (2) bereitzustellen, wodurch die zwei Teile der Schwalbenschwanzverbindung (23, 27) zusammen eingezwängt werden und ein jegliches Spiel zwischen den zwei Sektionen beseitigt wird.

28. Gepäckträger (1) nach Anspruch 27, bei welchem das manuell bedienbare drehbare Nockenrad (31) in der Sitzbasis (26) bereitgestellt ist, welche mit den Keilen (29) zusammenwirkt, und ein Mittel zum Bewegen derer in die Richtung, welche zur Vorspannung entgegengesetzt ist, bereitstellt, um somit die Keile (29) aus dem Verbindungsbereich zu entfernen und die gleitfähige Ineingriffnahme oder Trennung der Sitzbasis (26) und der Gepäckträger-Oberseite (2) zu ermöglichen.

29. Gepäckträger (1) nach einem der Ansprüche 1 bis 24, bei welchem die Gepäckträger-Oberseite (2) mehrere Stangen enthält, wobei zwei der Stangen, welche die Gepäckträger-Oberseite (2) ausmachen, zueinander parallel positioniert sind, so dass eine Sitzbasis (26), welche mit dem Zapfen oder dem Zapfenloch von einer Schwalbenschwanzverbindung (29) bereitgestellt ist, gleitfähig entweder um oder zwischen jeweils den parallelen Stangen befestigt werden kann, um eine Schwalbenschwanzverbindung zu erzeugen.

30. Gepäckträger (1) nach Anspruch 25 oder 29, bei welchem die Sitzbasis (26) U-förmig ausgebildet ist, wobei die zwei Ausleger parallel zur Schwalbenschwanz-Spur in der Gepäckträger-Oberseite (2) verlaufen, wobei ein Verriegelungsmechanismus bereitgestellt ist, welcher mittels einer manuell bedienbaren Einrichtung die zwei Ausleger von der Sitzbasis (26) derart bewegt, so dass sie die zwei Teile der Schwalbenschwanzverbindung (23, 27) fester in Eingriff nehmen und ein jegliches Spiel der Verbindung beseitigen.

31. Gepäckträger (1) nach Anspruch 30, bei welchem die Gepäckträger-Oberseite (2) mit dem Zapfen der Schwalbenschwanzverbindung bereitgestellt ist, und die Sitzbasis (26) mit dem Zapfenloch bereitgestellt ist, wobei der Verriegelungsmechanismus derart ausgelegt ist, dass er die zwei Ausleger zusammenzwängt, um somit den Zapfen an der Gepäckträger-Oberseite (2) fester zu ergreifen.

32. Gepäckträger (1) nach Anspruch 30, bei welchem die Gepäckträger-Oberseite (2) mit dem Zapfenloch der Schwalbenschwanzverbindung bereitgestellt ist, und die Sitzbasis (26) mit dem Zapfen bereitgestellt ist, und wobei der Verriegelungsmechanismus derart ausgelegt ist, dass er die zwei Ausleger voneinander wegzwängt, so dass jede Hälfte des Zapfens der Sitzbasis (26) mit dem Zapfenloch der Gepäckträger-Oberseite (2) fester in Eingriff steht.

33. Gepäckträger (1) nach einem der Ansprüche 31 oder 32, bei welchem der Verriegelungsmechanismus durch ein Schraubengewinde und eine Schraube durch die Sitzbasis (26) bereitgestellt ist, welche mittels eines manuell bedienbaren drehbaren Handgriffes die Ausleger der Sitzbasis (26) bewegt.

34. Gepäckträger (1) nach Anspruch 31, bei welchem der Verriegelungsmechanismus durch einen drehbaren Hebel (32) bereitgestellt ist, welcher einen exzentrischen Achsenpunkt von dessen Drehelement hat, wobei dieser Hebel (32) an einem Verbinder befestigt ist, welcher durch einen Ausleger der Sitzbasis (26) durchläuft und mit dem anderen verbunden ist, wobei
der Verriegelungsmechanismus derart entworfen ist, so dass bei einer Umdrehung des Hebels (32) und mittels der exzentrischen Befestigung ein Ausleger zu dem anderen gezogen wird, während der andere in die entgegengesetzte Richtung gedrückt wird, um somit die zwei Ausleger zusammenzubringen, um somit die Griffigkeit des Sitzbasis-Zapfenloches an dem Zapfen der Gepäckträger-Oberseite (2) zu erhöhen.

35. Gepäckträger (1) nach Anspruch 29, bei welchem die Sitzbasis (26) mit dem Zapfenloch von einer Schwalbenschwanzverbindung bereitgestellt ist und Mittel bereitgestellt sind, um die parallelen Stangen voneinander wegzudrücken, um somit die Sitzbasis (26) fester in Eingriff zu nehmen und sie an der Position zu sichern.

36. Gepäckträger (1) nach Anspruch 29, bei welchem die Sitzbasis (26) mit dem Zapfen von einer Schwalbenschwanzverbindung bereitgestellt ist und Mittel bereitgestellt sind, um die parallelen Stangen zusammenzuzwängen, um somit den Zapfen an der Sitzbasis (26) fester zu ergreifen und sie an der Position zu sichern.

37. Gepäckträger (1) nach einem der Ansprüche 25 bis 36, bei welchem die Sitzbasis (26) mit einer Sicherheitsverriegelung (28) bereitgestellt ist, welche an der Basis (26) drehbar befestigt ist, wobei die Sicherheitsverriegelung (28) mit Erweiterungen bereitgestellt ist, welche durch die Sitzbasis (26) durchlaufen, um mit nachgiebigen Elementen an der Gepäckträger-Oberseite (2) unterhalb in Eingriff zu gelangen, und zwar auf eine solche Art und Weise, dass verhindert wird, dass die Sitzbasis (26) aus der Gepäckträger-Oberseite (2) herausgleitet, ohne dass zunächst die Sicherheitsverriegelung (28) umdreht wird und die Erweiterungen von den nachgiebigen Elementen in der Gepäckträger-Oberseite (2) getrennt werden.

38. Gepäckträger (1) nach Anspruch 37, bei welchem die Sicherheitsverriegelung (28) mittels der Schwerkraft, welche sie in Position zieht, mit der Gepäckträger-Oberseite (2) in Eingriff gelangt.

39. Gepäckträger (1) nach Anspruch 37, bei welchem die Sicherheitsverriegelung (28) mittels einer Feder in die Ineingriffnahme-Position mit der Gepäckträger-Oberseite (2) vorgespannt ist.

40. Gepäckträger (1) nach einem der Ansprüche 25 bis 39, bei welchem mehrere Vorsprünge (35) bereitgestellt sind, welche sich von der Oberseite von der Sitzbasis (26) aus nach oben erstrecken, wobei diese Vorsprünge (35) derart geformt und an einem Ende von der Sitzbasis (26) angeordnet sind, so dass sie eine Hälfte von einem Gelenk zur Befestigung von einer Gabel ausbilden.

41. Gepäckträger (1) nach Anspruch 40, bei welchem jeder der Mehrzahl von Vorsprüngen (35) ein Loch (37), welches hindurchläuft, hat, welches die gleiche Größe hat und die gleiche Mittenachse mitbenutzt, wobei dieses Loch (37) dazu bereitgestellt ist, um einen trennbaren Achsenstift (40) für die entnehmbare Befestigung von der Gabel (36) aufzunehmen.

42. Gepäckträger (1) nach Anspruch 40 oder 41; bei welchem die Unterseite von der Gabel (36) mit mehreren Vorsprüngen (38) bereitgestellt ist, welche mit jenen integrierbar und verschränkbar sind, welche an der Oberseite von der Sitzbasis (26) bereitgestellt sind, wobei die Gabel-Vorsprünge (38) mit **dadurch** verlaufenden Löchern (39) bereitgestellt sind, welche die gleiche Größe haben und die gleiche Achse mitbenutzen, so dass die zwei Sätze von Vorsprüngen (35, 38) verriegelt werden können und der trennbare Achsenstift (40) durch jedes der Löcher (37, 39) verlaufen kann, um die Gabel (36) über eine drehbare Gelenk-Ineingriffnahme mit der Sitzbasis (26) zu verbinden.

43. Gepäckträger (1) nach einem der Ansprüche 40 bis 42, bei welchem die Gabel (37) mit einer Schulter (41) bereitgestellt ist, welche sich zwischen den Vorsprüngen (38) erstreckt und die gleiche Außenform hat wie die Basissitz-Gelenk-Vorsprünge (35), wobei die Schulter (41) derart bereitgestellt ist, dass sie den Öffnungsgrad des Gelenkes zwischen der Sitzbasis (26) und der Gabel (36) beschränkt, wodurch eine zu weite Fortbewegung von der Gabel (36) verhindert wird.

44. Gepäckträger (1) nach einem der Ansprüche 40 bis 43, bei welchem die Oberfläche von der Gabel (36) mit Elementen zur Befestigung von weiteren Trägerelementen bereitgestellt ist.

45. Gepäckträger (1) nach Anspruch 44, bei welchem das weitere Element ein Kindersitz (42) ist.

46. Gepäckträger (1) nach Anspruch 44, bei welchem das weitere Element eine Trageinheit ist, wie beispielsweise eine Kiste.

47. Gepäckträger (1) nach einem der Ansprüche 25 bis 46, bei welchem Federungsblöcke (43) zwischen der Gabel (36) und der Sitzbasis (26) bereitgestellt sind, um somit die Bewegung der Gabel (36) und von jeglichen weiteren angebrachten Elementen zu dämpfen, wenn das Fahrrad in Bewegung ist.

48. Gepäckträger (1) nach Anspruch 47, bei welchem die Oberseite von der Sitzbasis (26) und die Unterseite von der Gabel (36) ferner mit Merkmalen und Fixierpunkten zur Inbezugnahme der Federblöcke (43) bereitgestellt sind.

49. Gepäckträger (1) nach Anspruch 48, bei welchem es die Merkmale und Fixierpunkte ermöglichen, dass die Federblöcke (43) in einem Bereich der Positionen mit Bezug auf das Gelenk positioniert werden, so dass die Wirkung und das Ausmaß der Federung eingestellt werden können.

50. Gepäckträger (1) nach einem der Ansprüche 47 bis 49, bei welchem ferner eine Einstellwelle (44) bereitgestellt ist, welche einen manuell bedienbaren Griff an einem Ende hat, und wobei das andere Ende an der Sitzbasis (27) ruht, und zwar auf eine solche Art und Weise, dass die Welle (44) durch die Gabel (36) verläuft,
wobei ein zugeordnetes Schraubengewinde in der Gabel (36) bereitgestellt ist, mit welchem die Welle (44) über ein Gewinde in Eingriff steht, wobei die Welle (44) derart ausgerichtet ist, dass die Welle (44) bei einer Umdrehung ein Mittel bereitstellt, um die relativen Positionen von der Gabel (36) und der Sitzbasis (26) zu fixieren und die Federwirkungen von dem Gelenk und den Blöcken zu entfernen oder den möglichen Verfahrweg zwischen der Gabel (36) und der Sitzbasis (26) zu ändern, um somit die Federwirkung einzustellen.

51. Gepäckträger (1) nach Anspruch 50, bei welchem das Schraubengewinde in der Gabel (36) durch eine entnehmbare Gewindemutter (45) bereitgestellt ist, welche innerhalb der Gabel (36) untergebracht ist.

52. Gepäckträger (1) nach Anspruch 50 oder 51, bei welchem die Welle (44) ferner dazu ausgelegt ist, dass sie durch den Hauptkörper eines Kindersitzes (42) durchläuft, wenn dieser mit der Gabel (36) integriert ist, und zwar auf eine solche Art und Weise, dass sie nicht die Sitzposition des Kindes stört, während ein weiteres Verfahren zum Sichern des Sitzes (42) an der Gabel (36) bereitgestellt ist.

## Revendications

1. Support (1) pour bicyclette, comprenant :
une partie supérieure de support (2) ;
des montures d'essieu arrière (4) ;
dans lequel la partie supérieure de support (2) peut être reliée à un ou plusieurs éléments de support (3) qui peuvent être reliés à la partie supérieure de support (2) et s'étendre à partir de la partie supérieure de support (2) en direction des montures d'essieu arrière (4), ces montures d'essieu arrière (4) étant fixées sur le cadre de la bicyclette et fournissant un axe qui vient en prise avec les éléments de support (3) par l'intermédiaire d'une fente (19) de l'extrémité de chacun des éléments (3), la fente (19) étant formée pour être glissée sur l'axe et fixer l'ensemble de support sur la bicyclette ;
un raccord avant (5) est fourni, qui est fixé sur le cadre de la bicyclette dans une position vers l'avant de l'essieu arrière, pour fixer l'avant de la partie supérieure de support (2) sur la bicyclette pour donner un appui et empêcher le support (1) de tourner autour de la monture d'essieu arrière (4) ; dans lequel,
la partie supérieure de support (2) et le raccord avant (5) sont reliés mutuellement par l'intermédiaire d'une tige de fixation ajustable (9) qui est fixée de manière amovible sur la partie supérieure de support (2), la tige (9) s'étendant à partir de la partie supérieure de support (2) de telle sorte que sa seconde extrémité puisse être positionnée et maintenue dans un canal (10) agencé dans le raccord avant (5) pour fixer le support (1) tout en signifiant en outre qu'elle peut être adaptée à une diversité de conception de bicyclette, le canal (10) s'étendant dans une direction qui est perpendiculaire à la direction de déplacement de la bicyclette.

2. Support (1) selon la revendication 1, dans lequel le raccord avant (5) comprend de plus :
des étriers (6) pour relier le raccord (5) aux points de raccordement de support sur le cadre de la bicyclette par l'intermédiaire de vis ou d'écrou, la distance entre les deux étriers (6) pouvant être ajustée pour s'adapter à une diversité de largeurs de points de raccordement.

3. Support (1) selon la revendication 1, dans lequel le raccord avant (5) comprend de plus :
un étrier pour s'étendre autour d'un ou plusieurs des tubes d'une bicyclette afin de saisir le tube entre l'étrier et le corps principal du raccord avant (5) pour le relier au cadre ;
l'étrier de fixation étant relié au raccord (5) via une articulation au niveau d'un côté, et pouvant être relié au raccord (5) sur son autre coté par l'intermédiaire de moyens constitués d'un mécanisme pouvant être actionné à la main.

4. Support (1) selon les revendications 1 à 3, dans lequel le canal (10) du raccord avant (5) comprend :
un alésage (10) s'étendant à travers toute la longueur du corps du raccord (5), ayant un diamètre qui est suffisamment grand pour accepter la tige de fixation (9), tout en permettant en outre que l'extrémité de la tige (9) soit insérée dans l'une ou l'autre extrémité de l'alésage (10).

5. Support (1) selon les revendications 1 à 4, dans lequel le raccord avant (5) comprend de plus :
un verrou de sécurité disposé le long de la longueur de l'alésage (10), de telle sorte que lorsque la tige de fixation (9) est entièrement insérée dans le raccord (5) elle est bloquée en position et ne peut pas coulisser vers l'extérieur.

6. Support (1) selon la revendication 5, dans lequel le verrou de sécurité comprend :
une plaque (13) ayant deux coudes à angle droit pour former une forme de "U", des trous de la même dimension que l'alésage (10) étant percés à travers les parties opposées de la plaque (13),
des fentes (7) situées dans le raccord (5), qui sont mises en forme et positionnées pour accepter les parties opposées de la plaque de verrouillage (13), et qui s'étendent perpendiculairement à l'axe de l'alésage (10) et à travers son trajet, dans lequel,
les trous dans la plaque de verrouillage (13) sont positionnés de telle sorte que lorsque les parties opposées de la plaque (13) sont insérées dans les fentes (7), les trous sont alignés avec l'alésage (10),
la plaque (13) étant de plus rappelée par l'intermédiaire d'un ressort (12) pour pousser les trous en dehors de l'alignement avec l'alésage (10),
l'extrémité de la tige de fixation (9) destinée à être insérée dans le raccord (5), étant munie d'une gorge (14) dans la position appropriée de sorte qu'elle peut interagir avec la plaque rappelée (13) de sorte que le bord intérieur du trou sera poussé à l'intérieur de la gorge (14) et la tige (9) sera fixée en position.

7. Support (1) selon les revendications 1 à 6, dans lequel le raccord avant (5) est en outre muni d'une bande de sécurité (15), cette bande de sécurité (15) étant fixée sur le corps du raccord (5) d'une manière amovible, et étant positionnée de telle sorte qu'elle s'étend autour de l'arrière du raccord (5) pour entourer le tronçon de cadre sur lequel le raccord (5) est fixé, assurant ainsi que si le mécanisme de fixation principale a un défaut, le raccord (5) reste relié à la bicyclette et le support (1) reste sûr.

8. Support (1) selon les revendications 1 à 7, dans lequel la tige de fixation (9) est fixée sur la partie supérieure de support (2) au niveau d'un point d'une pluralité de points de fixation intégrés, ou sur une piste de fixation qui est munie d'un mécanisme de serrage pouvant être actionné à la main.

9. Support (1) selon les revendications 1 à 8, dans lequel une extrémité de la tige de fixation (9) est munie d'un mécanisme de fixation pour une liaison amovible avec l'un des points de fixation intégrés situés sur la partie supérieure de support (2), le mécanisme de fixation fournissant des moyens pour permettre à la tige (9) de tourner autour du point de fixation dans une direction verticale, telle que définie lorsque la partie supérieure de support (2) est reliée à la bicyclette, permettant ainsi que le support (1) soit fixé sur diverses conceptions de bicyclette.

10. Support (1) selon les revendications 1 à 9, dans lequel la tige de fixation (9) est mise en forme de sorte que les axes centraux de la tige (9) à chacune des extrémités sont à 90° l'un par rapport à l'autre, les deux axes ne se croisant pas l'un l'autre et étant séparés d'une distance prédéfinie.

11. Support (1) selon les revendications 1 à 10, dans lequel la tige de fixation (9) a une extrémité chanfreinée pour faciliter l'insertion dans le raccord avant (5) et l'intégration à travers les trous de la plaque de verrouillage (13).

12. Support (1) selon les revendications 1 à 11, dans lequel la monture d'essieu arrière (4) comprend un raccord du type champignon fixé sur le cadre de la bicyclette, ce raccord de type champignon ayant une forme cylindrique et possédant un diamètre extérieur qui varie de manière pas à pas le long de sa longueur, depuis un diamètre plus grand jusqu'à un plus petit et ensuite revient au premier diamètre pour ressembler à un "H", fournissant ainsi des moyens de fixation pour les éléments de support (3) du support (1).

13. Support (1) selon la revendication 12, dans lequel le raccord de type champignon comprend un alésage longitudinal s'étendant sur la longueur du raccord et le long de l'axe central, l'alésage étant utilisé pour fixer le raccord sur le cadre par l'intermédiaire d'une vis ou d'un boulon.

14. Support (1) selon la revendication 12, dans lequel le raccord de type champignon comprend un alésage longitudinal s'étendant sur la longueur du raccord et le long de l'axe central, l'alésage étant suffisamment large pour être positionné sur l'essieu de roue arrière, entre le cadre de la bicyclette et le moyeu de la roue arrière de manière à fixer le raccord sur la bicyclette.

15. Support (1) selon les revendications 12 à 14, dans lequel la largeur de la zone de diamètre réduit du raccord de type champignon est plus large que la largeur des éléments de support (3) dans la zone de fente (19).

16. Support (1) selon les revendications 1 à 15, dans lequel les éléments de support (3) comprennent une plaque de hauteur (18) et un bloc d'ajustement associé (17) pour ajuster la hauteur de la partie supérieure de support (2) au-dessus de la monture d'essieu arrière (4).

17. Support (1) selon la revendication 16, dans lequel la plaque de hauteur (18) est formée à partir d'une bande rigide, à une extrémité de laquelle est située la fente (19) destinée être intégrée avec l'axe de la monture d'essieu arrière (4) et le long de sa longueur la plaque est munie d'une série de trous pour ajuster le point de fixation entre la plaque (18) et le bloc d'ajustement en hauteur (17).

18. Support (1) selon la revendication 16 ou 17, dans lequel le bloc d'ajustement en hauteur (17) comprend une fente pour accepter la plaque de hauteur (18) et pour faciliter le positionnement de manière coulissante du bloc (17) au point voulu sur la plaque de hauteur (18), le bloc d'ajustement de hauteur (17) étant maintenu en position par l'intermédiaire d'un axe qui passe à travers le trou choisi de la plaque de hauteur (18).

19. Support (1) selon les revendications 16 à 18, dans lequel le bloc d'ajustement de hauteur (17) est relié à une ou plusieurs tiges de support qui s'étendent à partir de la partie supérieure de support (2).

20. Support (1) selon la revendication 19, dans lequel le nombre de tiges de support par élément de support (3) est de deux.

21. Support (1) selon les revendications 16 à 20, dans lequel la plaque de hauteur (18) comprend de plus une pince de fixation (20) reliée de manière rotative à l'extrémité de la plaque (18) à la fente (19), la pince (20) étant positionnée et mise en forme de telle sorte que lorsque la fente (19) dans la plaque de hauteur (18) est en prise avec l'axe, la pince (20) passe autour du côté inférieur de l'axe pour retenir la plaque de hauteur (18) et empêcher une libération accidentelle.

22. Support (1) selon la revendication 21, dans lequel la pince de fixation (20) est un ressort rappelé dans la position de verrouillage.

23. Support (1) selon les revendications 21 et 22, dans lequel la pince de fixation (1) est munie d'un capuchon protecteur (22) pour empêcher une détérioration de la pince (20) et de plus pour maintenir propre le mécanisme et le ressort (21).

24. Support (1) selon les revendications 1 à 23, dans lequel la partie supérieure de support (2) comprend une base solide, dont le côté inférieur est muni de moyens de fixation amovible à la fois des éléments de support (3) et de la tige d'ajustement (9).

25. Support (1) selon les revendications 1 à 24, dans lequel le côté supérieur de la partie supérieure de support (2) est mise en forme pour présenter le tenon ou la mortaise d'une articulation en queue-d'aronde (23) pour la mise en prise de manière pouvant coulisser d'une base de siège (26) qui est munie en contrepartie d'un tenon ou d'une mortaise (27) dimensionnée de manière appropriée.

26. Support (1) selon la revendication 25, dans lequel un mécanisme de verrouillage est agencé entre la partie supérieure de support (2) et la base de siège (26) pour supprimer tout jeu qui peut exister dans l'articulation en queue-d'aronde (23, 27) en résultat de tolérances de fabrication.

27. Porteur (1) selon la revendication 26, dans lequel le mécanisme de verrouillage prend la forme d'une paire de blocs en forme de coin (29) qui sont intégrés avec la base de siège (26) dans la zone de l'articulation en queue-d'aronde (23, 27), les blocs en forme de coin (2) étant positionnés à l'une ou l'autre extrémité de la piste d'articulation en queue-d'aronde et rappelés vers le centre de la base de siège (2), les tronçons plus étroits des coins (29) étant orientés dans la direction de ce rappel ;
les blocs en forme de coin (29) étant positionnés de plus de telle sorte que la face inclinée interagisse avec le corps de la base de siège (26) lorsqu'ils sont à rappeler vers l'intérieur, et que les coins (29) sont poussés dans la zone d'articulation en queue-d'aronde (23, 27) pour fournir des moyens de séparation de la base de siège (26) à partir de la partie supérieure de support (2), poussant ainsi ensemble les deux parties de l'articulation en queue-d'aronde (23, 27) et supprimant tout jeu entre les deux tronçons.

28. Support (1) selon la revendication 27, dans lequel une roue de came rotative pouvant être actionnée à la main (31) est agencée dans la base de siège (26) qui interagit avec les coins (29), et fournit des moyens pour les déplacer dans la direction opposée au rappel de manière à enlever les coins (29) de la zone d'articulation et permettre la mise en prise ou la libération de manière coulissante de la base de siège (26) et de la partie supérieure de support (2).

29. Support (1) selon les revendications 1 à 24, dans lequel la partie supérieure de support (2) comprend une série de tiges, deux des tiges constituant la partie supérieure de support (2) étant positionnées parallèlement l'une à l'autre, de sorte qu'une base de siège (26) munie de la mortaise ou du tenon d'une articulation en queue-d'aronde (27) peut être reliée de manière coulissante autour des tiges parallèles ou entre celles-ci, respectivement, pour créer une articulation en queue-d'aronde.

30. Support (1) selon les revendications 25 ou 29, dans lequel la base de siège (26) est mise en forme de "U" ayant les deux bras s'étendant parallèlement à la piste de queue-d'aronde de la partie supérieure de support (2), un mécanisme de verrouillage étant agencé par l'intermédiaire duquel un appareil pouvant être actionné à la main déplace les deux bras de la base de siège (26) de manière à mettre en prise de façon plus serrée les deux parties de l'articulation en queue-d'aronde (23, 27) et supprimer tout jeu de l'articulation.

31. Support (1) selon la revendication 30, dans lequel la partie supérieure de support (2) est munie du tenon de l'articulation en queue-d'aronde et la base de siège (26) de la mortaise, et le mécanisme de verrouillage agit pour pousser les deux bras l'un vers l'autre de manière à saisir de manière plus serrée le tenon sur la partie supérieure de support (2).

32. Support (1) selon la revendication 30, dans lequel la partie supérieure de support (2) est munie de la mortaise de l'articulation en queue-d'aronde et la base de siège (26) du tenon, et le mécanisme de verrouillage agit pour pousser les deux bras loin l'un de l'autre de sorte que chaque moitié du tenon de la base de ce siège (26) est en prise de manière plus serrée avec la mortaise de la partie supérieure de support (2).

33. Support (1) selon les revendications 31 et 32, dans lequel le mécanisme de verrouillage est fourni par un pas de vis et une vis à travers la base de siège (26) qui, par l'intermédiaire d'une poignée rotative pouvant être actionnée à la main, déplace les bras de la base de siège (26).

34. Support (1) selon la revendication 31, dans lequel le mécanisme de verrouillage est fourni par un levier rotatif (32) qui a un point d'essieu excentré de son élément rotatif, ce levier (32) est monté sur un raccord qui passe à travers un bras de la base de siège (26) et est fixé sur l'autre, dans lequel
le mécanisme de verrouillage est conçu de sorte que, lors d'une rotation du levier (32) et en vertu du montage excentré, un bras est tiré en direction de l'autre alors que l'autre est poussé dans la direction opposée de manière à réunir les deux bras pour augmenter la saisie de la mortaise de base de siège sur le tenon de la partie supérieure de support (2).

35. Support (1) selon la revendication 29, dans lequel la base de siège (26) est munie de la mortaise d'une articulation en queue-d'aronde et des moyens sont fournis pour pousser les tiges parallèles loin l'une de l'autre de sorte à venir à prise de manière plus serrée avec la base de siège (26) et la fixer en position.

36. Support (1) selon la revendication 29, dans lequel la base de siège (26) est munie du tenon d'une articulation en queue-d'aronde et des moyens sont fournis pour pousser les tiges parallèles l'une vers l'autre pour saisir de manière plus serrée le tenon sur la base de siège (26), en le fixant en position.

37. Support (1) selon les revendications 25 à 36, dans lequel la base de siège (26) est munie d'un verrou de sécurité (28) qui est monté sur la base (26) d'une manière rotative, le verrou de sécurité (28) étant muni de prolongements qui passent à travers la base de siège (26) pour venir en prise avec des caractéristiques élastiques situées sur le côté inférieur de la partie supérieure de support (26), de manière telle que le la base de siègé (26) est empêchée de glisser à l'extérieur de la partie supérieure de support (2) sans tout d'abord mettre en rotation le verrou de sécurité (28) et libérer les prolongements des caractéristiques élastiques de la partie supérieure de support (2).

38. Support (1) selon la revendication 37, dans lequel le verrou de sécurité (28) vient prise avec la partie supérieure de support (2) par l'intermédiaire de la gravité le tirant en position.

39. Support (1) selon la revendication 37, dans lequel le verrou de sécurité (28) est rappelé dans la position de prise avec la partie supérieure de support (2), par l'intermédiaire d'un ressort.

40. Support (1) selon les revendications 25 à 39, dans lequel une pluralité de saillies (35) sont agencées en s'étendant vers le haut à partir du côté supérieur de la base de siège (26), ces saillies (35) étant mises en forme et agencées à une extrémité de la base de siège (26) de manière à former une moitié d'une articulation destinée à la fixation d'un berceau. (36).

41. Support (1) selon la revendication 40, dans lequel chacune de la pluralité de saillies (35) a un trou (37) la traversant ayant la même dimension et partageant le même axe central, ce trou (37) étant agencé pour accepter un axe d'essieu séparable (40) pour la fixation amovible du berceau (36).

42. Support (1) selon les revendications 40 et 41, dans lequel le côté inférieur du berceau (36) est muni d'une série de saillies (38) qui sont intégrées et entrelacées avec celles fournies sur le côté supérieur de la base de siège (26), les saillies de berceau (38) étant munies de trous (39) qui les traversent, ayant la même dimension et partageant le même axe, de sorte que les deux ensembles de saillies (35, 38) peuvent être bloqués mutuellement et l'axe d'essieu séparable (40) passé à travers chacun des trous (37, 39) pour fixer le berceau (36) sur la base de siège (26) via une mise en prise d'articulation rotative.

43. Support (1) selon les revendications 40 à 42, dans lequel le berceau (37) est muni d'un épaulement (41) qui s'étend entre les saillies (38) et suit le même contour que les saillies d'articulation de siège de base (35), l'épaulement (41) étant agencé de manière à limiter la quantité d'ouverture de l'articulation entre la base de siège (26) et le berceau (36), empêchant ainsi le berceau (36) de basculer trop loin vers l'avant.

44. Support (1) selon les revendications 40 à 43, dans lequel la surface supérieure du berceau (36) est munie d'accessoires destinés à la fixation d'autres éléments de support.

45. Support (1) selon la revendication 44, dans lequel l'autre élément de support est un siège pour enfant (42).

46. Support (1) selon la revendication 44, dans lequel l'autre élément est une unité de transport, telle qu'une boîte.

47. Support (1) selon les revendications 25 à 46, dans lequel des blocs de suspension (43) sont agencés entre le berceau (36) et la base de siège (26), de manière à amortir le mouvement du berceau (36) et de tous autres éléments fixés, alors que la bicyclette est en mouvement.

48. Support (1) selon la revendication 47, dans lequel la surface supérieure de la base de siège (26) et la surface inférieure du berceau (36) sont de plus munies de caractéristiques et de points de fixation destinés à incorporer les blocs de suspension (43).

49. Support (1) selon la revendication 48, dans lequel les caractéristiques et points de fixation permettent que les blocs de suspension (43) soient positionnés dans une plage de positions par rapport à l'articulation, de sorte que l'effet et l'étendue de la suspension peuvent être ajustés.

50. Support (1) selon les revendications 47 à 49, dans lequel est en outre fournie une tige d'ajustement (44) qui a une saisie pouvant être actionnée à la main sur une extrémité, l'autre extrémité étant en appui contre la base de siège (26), de manière telle que la tige filetée (44) passe à travers le berceau (36),
un pas de vis associé est agencé dans le berceau (36) avec lequel la tige filetée (44) est en prise de manière vissée, la tige filetée (44) étant orientée de telle sorte que lors d'une rotation la tige filetée (44) fournit des moyens pour fixer les positions relatives du berceau (36) et de la base de siège (26) et enlever les effets de suspension de l'articulation et des blocs, ou pour modifier la quantité de déplacement possible entre le berceau (36) et la base de siège (26) de manière à ajuster les effets de suspension.

51. Support (1) selon la revendication 50, dans lequel le pas de vis du berceau (36) est fourni par un écrou amovible (45) reçu dans le berceau (36).

52. Support selon les revendications 50 et 51, dans lequel la tige filetée (44) est en outre adaptée de telle sorte qu'elle passe à travers le corps d'un siège pour enfant (42) s'il est intégré avec le berceau (36) de manière telle qu'elle n'interfère pas avec la position assise de l'enfant, tout en fournissant un procédé de fixation supplémentaire du siège (42) sur le berceau (36).
